# FASCICULE DE BREVET EUROPEEN

(11) **EP 4 014 796 B1**
(45) Date de publication et mention de la délivrance du brevet: **20.08.2025**
(21) Numéro de dépôt: 21213858.0
(22) Date de dépôt: 10.12.2021
(51) Int. Cl.: A47J 27/08, A47J 27/09

(54) **AUTOCUISEUR A BAIONNETTE POURVU D'UN MODULE DE COMMANDE**
SCHNELLKOCHTOPF MIT BAJONETTVERSCHLUSS, DER MIT EINEM STEUERMODUL AUSGESTATTET IST
BAYONET PRESSURE COOKER PROVIDED WITH A CONTROL MODULE

(30) Priorité: 18.12.2020 FR 2013738
(43) Date de publication de la demande: 22.06.2022
(73) Titulaire: SEB S.A., 69130 Ecully (FR)
(72) Inventeur: BARAILLE, Eric Laurent, 21121 FONTAINE LES DIJON (FR); CHAMEROY, Eric, 21260 VERONNES (FR); RHETAT, Eric Christian Jacques, 21000 DIJON (FR)
(74) Mandataire: Cabinet Didier Martin

(56) Documents cités:
- EP-A1- 2 898 800
- EP-A1- 3 100 652

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

La présente invention concerne plus particulièrement un appareil de cuisson d'aliments sous pression comportant :
- une cuve ainsi qu'un couvercle destiné à être verrouillé relativement à la cuve pour former avec elle une enceinte de cuisson apte à monter en pression,
- un système de verrouillage à baïonnette configuré pour assurer le verrouillage et le déverrouillage du couvercle relativement à la cuve par pivotement du couvercle relativement à la cuve,
- un support destiné à être attaché audit couvercle de façon que ce dernier puisse pivoter relativement audit support selon un premier axe de rotation entre deux positions correspondant respectivement à une configuration de déverrouillage et une configuration de verrouillage,
- un organe de commande du verrouillage / déverrouillage actionnable manuellement et destiné à être attaché audit support par une liaison mécanique autorisant le déplacement manuel dudit organe de commande relativement audit support,
- un dispositif de transformation dudit déplacement manuel de l'organe de commande en pivotement du couvercle relativement au support, ledit dispositif de transformation comprenant au moins une conformation motrice destinée à être portée par l'organe manuel de commande et au moins une conformation réceptrice destinée à être reliée au couvercle et à être engagée par ladite conformation motrice,
- et un moyen de régulation de pression pour maintenir la pression régnant au sein de l'enceinte de cuisson à un niveau de consigne.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve.

Il existe différents types de moyens de verrouillage bien connus dans l'art antérieur. L'un des systèmes les plus répandus est le système de verrouillage à baïonnette, qui repose sur la mise en œuvre de rampes de cuve et de couvercle destinées à venir en appui mutuel glissant après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues par repliement et découpe du bord supérieur libre de la cuve.

Un tel système de verrouillage à baïonnette donne globalement satisfaction, notamment en raison de son poids relativement faible, de sa simplicité de fabrication et de sa fiabilité.

Il présente toutefois, dans ses modes de réalisation les plus élémentaires, certains inconvénients significatifs, notamment en matière de praticité et d'ergonomie.

Afin de remédier à ces inconvénients, il a été proposé un autocuiseur à baïonnette pourvu d'un mécanisme de commande à démultiplication d'efforts reposant sur la mise en œuvre d'une arche de commande rotative qui entraîne le déplacement à coulissement d'un chariot lui-même actionnant en réponse un système de biellette qui permet l'entraînement en rotation du couvercle.

Un tel système donne toute satisfaction en matière de simplicité d'utilisation et d'ergonomie. Il présente toutefois lui aussi certains inconvénients.

En particulier, l'entretien et le nettoyage de cet autocuiseur connu peuvent s'avérer complexe et fastidieux, compte-tenu notamment du grand nombre de pièces, en particulier mobiles, montées sur le couvercle. Il est ainsi compliqué, sinon impossible, de laver cet autocuiseur connu au lave-vaisselle. De nombreux composants montés sur le couvercle assurent en effet, directement ou indirectement, des fonctions de sécurité. Ils doivent de ce fait éviter de subir des sollicitations thermiques ou mécaniques répétées, qui risqueraient de les faire vieillir prématurément, voire de les endommager. Cela interdit le lavage complet de cet appareil connu au lave-vaisselle, afin de préserver les composants et mécanismes susmentionnés. En outre, l'encombrement du couvercle de cet autocuiseur connu, en dehors de toute autre considération, limite fortement, voire interdit à lui seul, le lavage en lave-vaisselle.

L'encombrement du couvercle de cet autocuiseur connu complique également son stockage et son rangement.

De plus, en cas de rupture ou de détérioration de l'un des multiples composants mobiles (arche rotative, chariot coulissant, biellette...) qui forment le système de démultiplication d'effort mis en œuvre par cet autocuiseur connu, la réparation peut s'avérer délicate et longue à effectuer, même par un professionnel.

Enfin, les signes distinctifs d'appartenance à une gamme commerciale des autocuiseurs connus décrits précédemment sont généralement situés pour la plupart sur des pièces montées sur le couvercle. En effet, ces pièces se prêtent, plus aisément et à moindre coût que le couvercle lui-même, à des travails de forme, de couleur, ou encore d'aspect de surface, qui permettent d'identifier clairement l'autocuiseur de manière visuelle. Pour des raisons de standardisation industrielle, il est dès lors intéressant, pour une taille d'autocuiseur donnée, de produire un modèle unique de couvercle et de cuve, la différenciation des produits se faisant grâce aux pièces formant le mécanisme de commande, montées sur le couvercle.

Il s'avère donc particulièrement intéressant de pratiquer le plus tard possible cette opération industrielle de différenciation des produits, afin de bénéficier d'une souplesse de stock maximal et d'ajuster au mieux la production de tel ou tel modèle en fonction des demandes du marché.

Cependant, la complexité du mécanisme de commande mis en oeuvre par l'autocuiseur connu décrit dans ce qui précède, et qui découle de la mise en œuvre d'une multiplicité de composants mobiles (arche rotative, chariot coulissant, biellette...), nécessite un montage relativement précoce, sur la chaîne de fabrication, des différentes pièces du mécanisme portées par le couvercle, de sorte que la conception connue empêche de différencier les produits en toute fin de processus industriel. Outre cette impossibilité de différenciation tardive des produits, la conception de l'autocuiseur connu précité ne permet pas non plus de bénéficier d'une organisation industrielle flexible et décentralisée.

Le document EP-3 100 652 A1 décrit un appareil de cuisson sous pression comportant une cuve, un couvercle, un système de verrouillage à baïonnette, un organe de commande du verrouillage qui est attaché à un support par une liaison mécanique autorisant le déplacement dudit organe de commande et est connecté au couvercle par un dispositif de transformation dudit déplacement de l'organe de commande en pivotement du couvercle, ladite liaison mécanique étant conçue pour que ledit déplacement manuel de l'organe de commande soit formé par un déplacement en rotation autour d'un axe de rotation parallèle à l'axe vertical central et/ou par un déplacement en translation.

Les objets assignés à l'invention visent en conséquence à remédier aux différents inconvénients énumérés précédemment, et à proposer un nouvel appareil de cuisson d'aliments sous pression qui, tout en étant de construction particulièrement simple et bon marché, présente une conception qui permet une fabrication industrielle particulièrement facile et flexible, simplifie le nettoyage et le stockage de l'appareil, ainsi que sa réparation éventuelle, tout en le rendant facilement évolutif.

Un autre objet de l'invention vise à proposer un nouvel appareil de cuisson d'aliments sous pression de construction particulièrement fiable, compacte et qui permet d'optimiser la fabrication industrielle.

Un autre objet de l'invention vise à proposer un nouvel appareil de cuisson d'aliments sous pression particulièrement pratique à utiliser.

Un autre objet de l'invention vise à proposer un nouvel appareil de cuisson d'aliments sous pression particulièrement léger et robuste.

Un autre objet de l'invention vise à proposer un nouvel appareil de cuisson d'aliments sous pression dont la conception permet de faciliter le montage et la différenciation des produits en usine.

Un autre objet de l'invention vise à proposer un nouvel appareil de cuisson d'aliments sous pression qui procure un haut niveau de sécurité d'utilisation.

Un autre objet de l'invention vise à proposer un nouvel appareil de cuisson d'aliments sous pression qui est particulièrement ergonomique et procure un confort d'utilisation remarquable.

Un autre objet de l'invention vise à proposer un nouvel appareil de cuisson d'aliments sous pression dont l'utilisation est particulièrement intuitive.

Un autre objet de l'invention vise à proposer un nouvel appareil de cuisson d'aliments sous pression qui est facile et pratique à ranger et à laver en lave-vaisselle.

Les objets assignés à l'invention sont atteints à l'aide d'un appareil de cuisson d'aliments sous pression comportant :
- une cuve ainsi qu'un couvercle destiné à être verrouillé relativement à la cuve pour former avec elle une enceinte de cuisson apte à monter en pression,
- un système de verrouillage à baïonnette configuré pour assurer le verrouillage et le déverrouillage du couvercle relativement à la cuve par pivotement du couvercle relativement à la cuve,
- un support destiné à être attaché audit couvercle de façon que ce dernier puisse pivoter relativement audit support selon un premier axe de rotation entre deux positions correspondant respectivement à une configuration de déverrouillage et une configuration de verrouillage,
- un organe de commande du verrouillage / déverrouillage actionnable manuellement et destiné à être attaché audit support par une liaison mécanique autorisant le déplacement manuel dudit organe de commande relativement audit support,
- un dispositif de transformation dudit déplacement manuel de l'organe de commande en pivotement du couvercle relativement au support, ledit dispositif de transformation comprenant au moins une conformation motrice destinée à être portée par l'organe manuel de commande et au moins une conformation réceptrice destinée à être reliée au couvercle et à être engagée par ladite conformation motrice,
- un moyen de régulation de pression pour maintenir la pression régnant au sein de l'enceinte de cuisson à un niveau de consigne,
ledit appareil étant caractérisé en ce qu'il comprend un module de commande attaché de façon amovible audit couvercle, ledit module de commande embarquant au moins un premier sous-ensemble qui inclut au moins ledit moyen de régulation de pression et ladite conformation réceptrice.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :

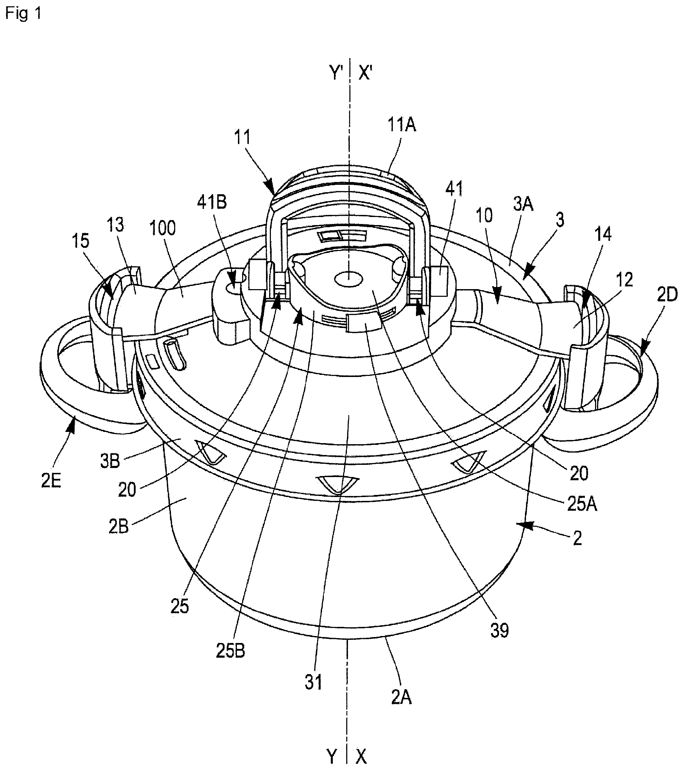

La figure 1 illustre, selon une vue en perspective schématique, un appareil de cuisson d'aliments sous pression conforme à un premier mode de réalisation de l'invention, qui se trouve dans une configuration de déverrouillage dans laquelle le couvercle est rapporté sur la cuve selon un agencement relatif prédéterminé permettant au système de verrouillage à baïonnette de verrouiller le couvercle à la cuve par pivotement du couvercle, ledit agencement relatif prédéterminé correspondant ainsi à une configuration d'attente de verrouillage de l'appareil, dont l'organe de commande du verrouillage/déverrouillage se trouve dans une position déployée correspondant au déverrouillage du couvercle relativement à la cuve.
La figure 2 est une vue éclatée de l'appareil de cuisson de la figure 1, lequel se compose en l'espèce de trois unités formées respectivement par un sous-ensemble de cuve, un couvercle et un module de commande destiné à être fixé de façon amovible au couvercle, pour former avec ce dernier un sous-ensemble de couvercle destiné à être rapporté sur la cuve.
La figure 3 est une vue de dessus de l'appareil de cuisson de la figure 1.
La figure 4 illustre un détail de l'appareil des figures 1 à 3, et plus précisément un détail de réalisation du sous-ensemble de couvercle, selon une vue en perspective de dessus.
La figure 5 est une vue en perspective de dessous du sous-ensemble de couvercle de la figure 4.
La figure 6 est une vue éclatée permettant de visualiser certains des composants formant le sous-ensemble de couvercle de l'appareil de cuisson des figures 1 à 5.
La figure 7 illustre, selon une vue partiellement en coupe, le module de commande qui équipe le couvercle de l'appareil de cuisson des figures 1 à 6.
La figure 8 illustre, selon une vue schématique en perspective de dessous, le module de commande de la figure 7.
La figure 9 illustre, selon une vue en coupe, le sous-ensemble de couvercle de l'appareil de cuisson de la figure 1.
La figure 10 illustre, selon une vue schématique en perspective de dessus, l'appareil de cuisson des figures précédentes qui se trouve cette fois dans une configuration de verrouillage, selon laquelle le couvercle est verrouillé relativement à la cuve avec l'organe de commande du verrouillage/déverrouillage dans une position rabattue.
La figure 11 illustre, selon une vue partiellement en coupe, un détail de réalisation de l'appareil de cuisson verrouillé de la figure 10.

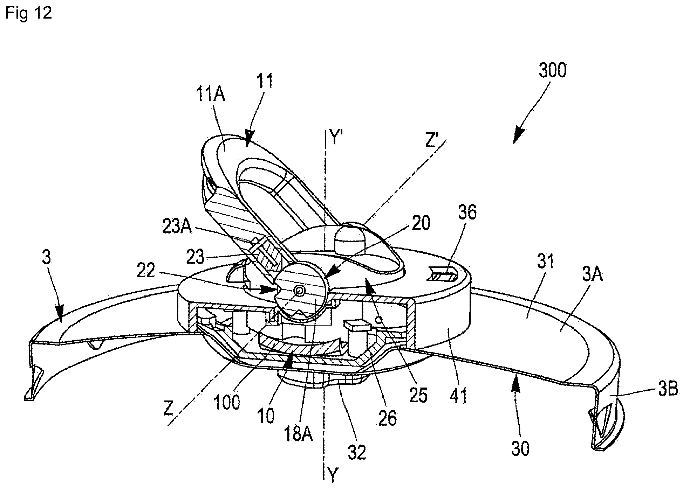

La figure 12 est une vue en coupe partielle du sous-ensemble de couvercle de l'appareil des figures précédentes, lequel est pourvu d'un moyen de sécurité à l'ouverture occupant une position de blocage dans laquelle il empêche le déverrouillage du couvercle, l'organe de commande se trouvant quant à lui dans une position intermédiaire entre ses première et deuxième positions extrémales correspondant respectivement au déverrouillage et au verrouillage du couvercle relativement à la cuve, l'organe de commande étant désaccouplé de chaque conformation motrice sous l'effet d'un débrayage opéré par un dispositif de liaison débrayable assurant la liaison mécanique entre l'organe de commande et chaque conformation motrice que porte ce dernier.
La figure 13 illustre, selon une vue en perspective schématique, un appareil de cuisson d'aliments sous pression conforme à un deuxième mode de réalisation de l'invention, qui se trouve dans une configuration de verrouillage, selon laquelle le couvercle est verrouillé relativement à la cuve avec l'organe de commande du verrouillage/déverrouillage dans une position rabattue.
La figure 14 illustre, selon une vue de dessus en perspective, le couvercle et le module de commande détachable de l'appareil de cuisson de la figure 13, le module de commande étant détaché du couvercle.
La figure 15 est identique à la figure 14 à la différence près qu'il s'agit cette fois d'une vue en perspective latérale.
La figure 16 illustre le module de commande des figures 14 et 15, lequel est formé par un premier et un deuxième sous-ensemble qui sont ici détachés l'un de l'autre.
La figure 17 est identique à la figure 16 à la différence près qu'il s'agit ici d'une vue en perspective latérale.
La figure 18 illustre, selon une vue en coupe, le sous-ensemble de couvercle de l'appareil de cuisson des figures 13 à 17.

Comme illustré aux figures, l'invention concerne un appareil 1 de cuisson d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 conforme à l'invention est conçu pour monter en pression exclusivement sous l'effet d'une source de chauffe (embarquée ou externe), sans apport de pression externe. L'appareil 1 de cuisson d'aliments sous pression constitue donc un autocuiseur, destiné préférentiellement à être disposé sur une plaque de cuisson indépendante pour en chauffer le contenu. L'appareil de cuisson 1 conforme à l'invention comporte au moins une cuve 2 formant récipient de cuisson, destinée à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Avantageusement, et comme illustré aux figures, l'appareil de cuisson 1 comprend au moins une poignée de cuve 2D qui est fixée à ladite cuve 2, de façon à faire saillie extérieurement de cette dernière. Dans les modes de réalisation illustrés aux figures, ladite poignée de cuve 2D est montée sur la face externe de la paroi latérale 2B de la cuve 2, de façon à s'étendre radialement vers l'extérieur de la cuve 2 et à former ainsi une prise destinée à être attrapée manuellement par l'utilisateur pour manipuler la cuve 2 (par exemple pour la soulever et la déplacer). Dans les modes de réalisation illustrés aux figures, l'appareil de cuisson 1 comprend deux poignées identiques 2D, 2E fixées sur la paroi latérale 2B de la cuve 2 de façon diamétralement opposée par rapport à l'axe central X-X', lesdites poignées de cuve 2D, 2E étant en l'espèce disposées à proximité du bord supérieur libre 2C de la cuve 2. Il est toutefois parfaitement envisageable que la cuve 2 ne soit munie que d'une seule poignée de cuve, ou de plus de deux poignées de cuve (par exemple trois ou quatre), sans pour autant que l'on sorte du cadre de l'invention.

L'appareil 1 conforme à l'invention comprend également un couvercle 3 destiné à être associé à la cuve 2 et verrouillé relativement à cette dernière pour former avec elle une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité (non illustrée), formée de préférence par un joint annulaire souple, en élastomère par exemple, destinée à être interposée entre le couvercle 3 et la cuve 2, pour empêcher ainsi toute fuite incontrôlée de vapeur et/ou d'air entre l'intérieur de l'enceinte et l'extérieur. Le couvercle 3 est de manière classique fabriqué à partir d'un matériau métallique tel que l'acier inoxydable ou l'aluminium. Il présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Le couvercle 3 présente une face interne 30 destinée à se trouver en regard de la cuve 2 et une face externe 31 opposée. Dans les modes de réalisation illustrés aux figures, le couvercle 3 inclut un élément de couverture discoïde 3A de forme et dimensions conjuguées à celles de l'ouverture d'accès délimitée par le bord supérieur libre 2C de la paroi latérale annulaire 2B de la cuve 2. Dans ce mode de réalisation, le couvercle 3 inclut également avantageusement une ceinture annulaire 3B, par exemple de forme sensiblement cylindrique ou tronconique. Dans les modes de réalisation illustrés aux figures, la ceinture annulaire 3B est formée par un bord tombant qui s'étend vers le bas à partir de la périphérie de l'élément de couverture discoïde 3A. Dans ce mode de réalisation, le couvercle 3 est destiné à venir coiffer de façon sensiblement ajustée le sommet de la cuve 2, de sorte que la ceinture annulaire 3B entoure par l'extérieur le sommet de la paroi latérale annulaire 2B et le bord supérieur libre 2C, tandis que l'élément de couverture discoïde 3A repose en appui sur le bord libre 2C, par l'intermédiaire du joint d'étanchéité (non illustré) interposé entre la cuve 2 et le couvercle 3. Il est cependant parfaitement envisageable que la ceinture annulaire 3B soit alternativement destinée à être insérée au sein de la cuve 2, de façon à être entourée par, et contenue dans, la cuve 2, sans pour autant que l'on sorte du cadre de l'invention.

L'appareil 1 de cuisson d'aliments sous pression conforme à l'invention comprend un moyen de régulation de pression 4, incluant de préférence une soupape, par exemple à poids ou à ressort, pour maintenir la pression régnant au sein de l'enceinte de cuisson à un niveau de consigne, qui peut éventuellement être ajustable par l'utilisateur (soupape à tarage réglable). Avantageusement le moyen de régulation de pression 4 est monté sur le couvercle 3, de façon par exemple à être porté par ce dernier. Ledit moyen de régulation de pression 4 est configuré pour maintenir la pression régnant dans l'enceinte de cuisson à une valeur prédéterminée sensiblement constante (niveau de consigne), dite pression de fonctionnement, laquelle excède la pression atmosphérique d'une valeur seuil qui est comprise par exemple entre sensiblement 10 et 120 kPa, de préférence de l'ordre de 100 kPa. Le principe de fonctionnement général d'un tel moyen de régulation de pression est bien connu en tant que tel, de sorte qu'il n'est pas nécessaire de le décrire plus avant ici. L'appareil 1 de cuisson d'aliments sous pression peut bien entendu comporter d'autres organes de fonctionnement (par exemple un moyen de sécurité à l'ouverture 5 qui sera décrit plus en détails dans ce qui suit, une soupape de sécurité à la surpression 6, *etc.).*

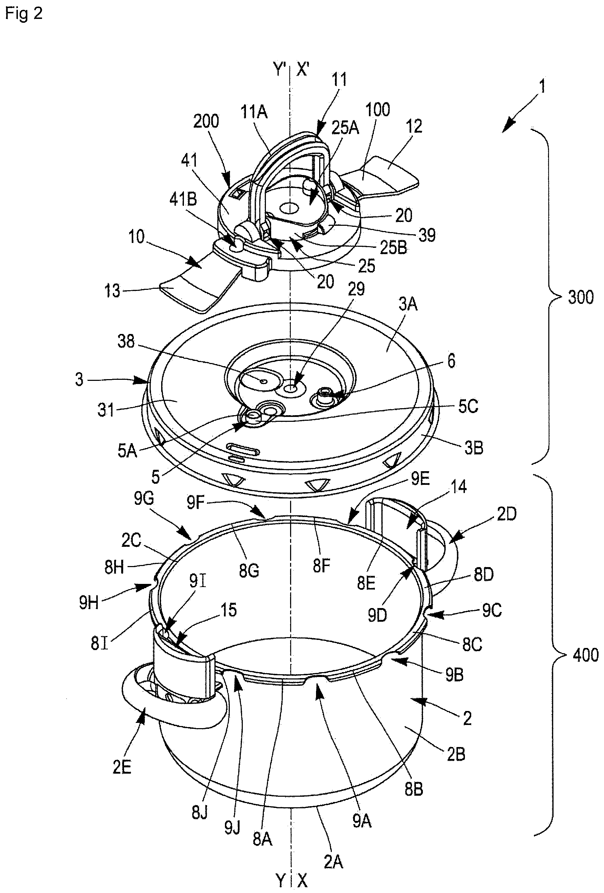

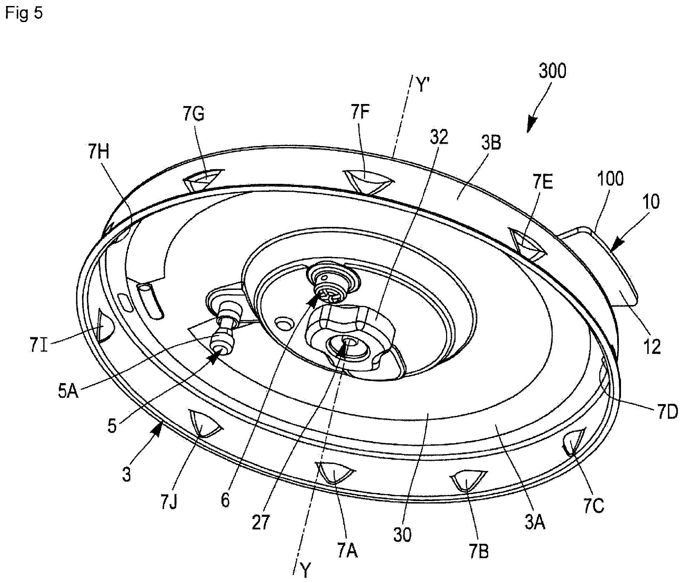

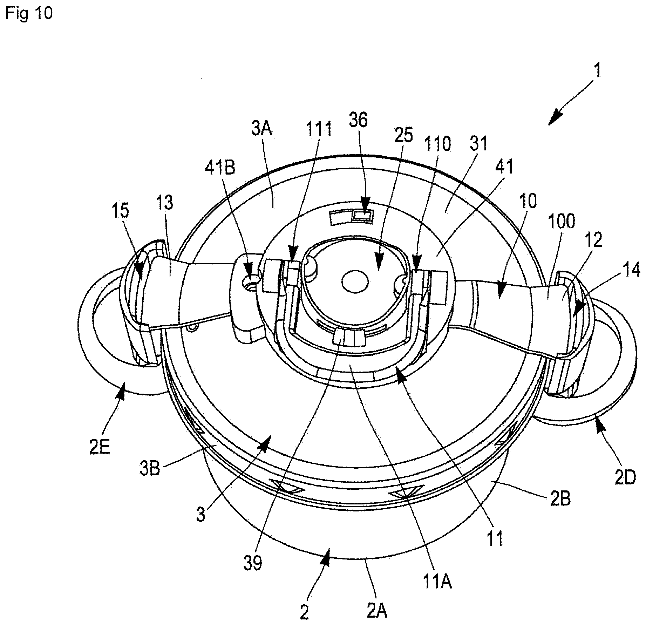

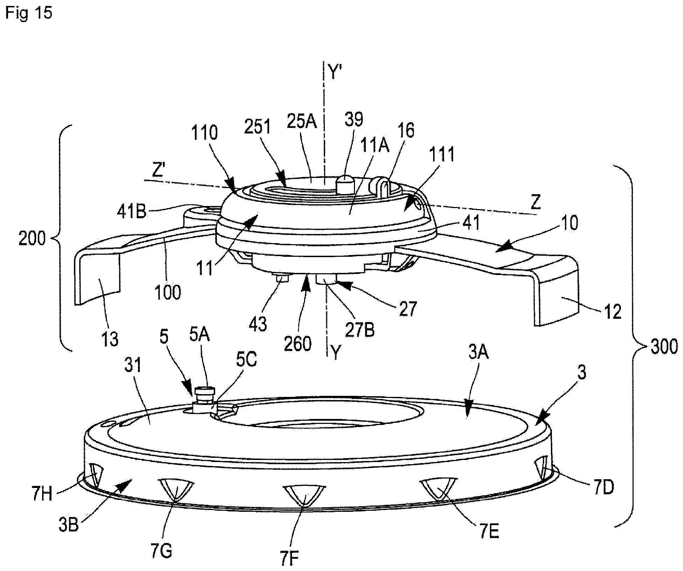

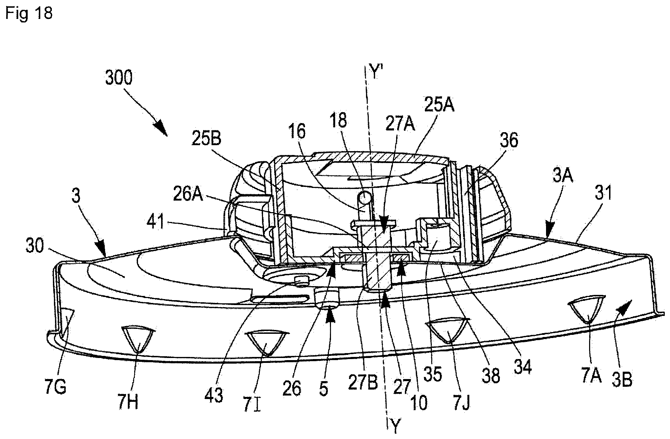

L'appareil 1 conforme à l'invention comporte également un système de verrouillage à baïonnette, afin de permettre à l'enceinte de cuisson formée par l'association du couvercle 3 et de la cuve 2 d'atteindre au moins la pression de fonctionnement susvisée sans risque de voir le couvercle 3 échapper sous l'effet de la pression régnant au sein de l'enceinte. En d'autres termes, le système de verrouillage est conçu pour assurer une liaison mécanique entre la cuve 2 et le couvercle 3 qui soit suffisamment robuste pour empêcher le couvercle 3 de se séparer de la cuve 2 sous l'effet de la montée en pression au sein de l'enceinte de cuisson. Plus précisément, ledit système de verrouillage à baïonnette est configuré pour assurer le verrouillage et le déverrouillage du couvercle 3 relativement à la cuve 2, par pivotement du couvercle 3 relativement à la cuve 2, selon en l'espèce ledit axe vertical central X-X', pour faire ainsi passer l'appareil 1 d'une configuration d'attente de verrouillage, dans laquelle le couvercle 3 est rapporté sur la cuve 2 et repose librement sur cette dernière (figure 1), à une configuration de verrouillage dans laquelle la cuve 2 et le couvercle 3 interagissent pour empêcher leur libre séparation (figure 10), et inversement. Ainsi, dans les modes de réalisation illustrés aux figures, l'appareil 1 passe de sa configuration d'attente de verrouillage à sa configuration de verrouillage par rotation du couvercle 3 relativement à la cuve 2 selon une course angulaire prédéterminée (par exemple comprise entre 10° et 30°, de préférence comprise entre 10° et 20°, par exemple 15°) autour de l'axe central X-X', dans un premier sens. L'appareil 1 passe inversement de sa configuration de verrouillage à sa configuration d'attente de verrouillage par rotation du couvercle 3 relativement à la cuve 2 selon ladite course angulaire prédéterminée autour de l'axe central X-X' dans un deuxième sens opposé audit premier sens. Le système de verrouillage à baïonnette de l'appareil de cuisson 1 comprend avantageusement à cet effet des première et deuxième séries d'excroissances 7A-7J, 8A-8J qui sont solidaires respectivement du couvercle 3 (cf. figures 5, 15 et 18) et de la cuve 2 (cf. figure 2) et qui sont conçus, afin d'assurer le verrouillage et le déverrouillage du couvercle 3 relativement à la cuve 2, pour venir s'engager, respectivement se dégager, mutuellement par rotation du couvercle 3 relativement la cuve 2 autour de l'axe vertical central X-X' selon ladite course angulaire prédéterminée. Comme cela est bien connu en tant que tel, les excroissances 7A-7J, 8A-8J de chacune desdites première et deuxième séries sont destinées à coopérer deux à deux, c'est-à-dire que chaque excroissance de l'une desdites séries est amenée, par rotation du couvercle 3 relativement à la cuve 2, à passer sous une excroissance correspondante de l'autre série pour verrouiller le couvercle 3 relativement la cuve 2. Dans les modes de réalisation illustrés aux figures, les excroissances 7A-7J de la première série, solidaires du couvercle 3, font saillie radialement vers l'intérieur du couvercle 3, tandis que les excroissances 8A-8J de la deuxième série, solidaires de la cuve 2, font saillie radialement à partir de la face externe de la paroi latérale 2B de la cuve 2, vers l'extérieur de cette dernière. Il est cependant parfaitement envisageable que les excroissances de verrouillage 7A-7J du couvercle 3 fassent saillie vers l'extérieur du couvercle 3 et que les excroissances 8A-8J de cuve fassent alors saillie radialement vers l'intérieur de cette dernière. L'invention n'est donc pas limitée à une configuration particulière des rampes de verrouillage (formées par les excroissances 7A-7J, 8A-8J) du système à baïonnette, l'essentiel étant que les excroissances de couvercle 7A-7J et de cuve 8A-8J, formant respectivement des rampes de couvercle et de cuve, coopèrent ensemble par mise en rotation relative de la cuve 2 et du couvercle 3, en l'espèce selon l'axe vertical central X-X', pour que les rampes de couvercle viennent se positionner sous les rampes de cuve afin de réaliser une liaison mécanique entre la cuve 2 et le couvercle 3 capable de résister à la pression interne régnant dans l'enceinte de cuisson. Dans les exemples illustrés aux figures, chaque excroissance 7A-7J de couvercle est constituée par un élément en volume obtenu par une déformation volumique locale de la matière constitutive de l'enveloppe du couvercle 3, et plus précisément de la ceinture annulaire 3B le long de laquelle sont de préférence disposée, à intervalles réguliers ou non, les excroissances 7A-7J. Chaque excroissance forme ainsi une protubérance, qui vient de matière avec la ceinture annulaire 3B et qui fait saillie de ladite ceinture annulaire en définissant d'un côté une face intérieure convexe et de l'autre côté, en *« négatif »,* une face extérieure concave opposée correspondant par exemple à l'empreinte d'application d'un outil de formage, de préférence un outil d'emboutissage. L'invention n'est cependant absolument pas limitée à la mise en oeuvre d'excroissances 7A-7J spécifiques, et en particulier obtenues par emboutissage comme dans les exemples illustrés aux figures. Il est par exemple tout à fait envisageable que les excroissances 7A-7J de couvercle soient formées par des languettes plates obtenues par repliement localisé vers l'intérieur du bord libre de la ceinture annulaire 3B du couvercle 3. Dans les exemples illustrés aux figures, les excroissances 8A-8J de cuve sont quant à elles formées par un rebord annulaire qui déborde vers l'extérieur à partir du bord supérieur libre 2C, des encoches 9A-9J étant ménagées à travers ledit rebord annulaire de façon à permettre le passage desdites excroissances 7A-7J de couvercle, de sorte que les portions dudit rebord annulaire qui s'étendent entre chaque encoche 9A-9J, forment les rampes de cuve respectives destinées à coopérer avec les excroissances 7A-7J de couvercle qui forment les rampes de couvercle. Ainsi, lorsque le couvercle 3 vient coiffer la cuve 2, les excroissances 7A-7J de couvercle peuvent passer par les encoches 9A-9J pour se retrouver plus bas que le rebord annulaire. L'appareil 1 se trouve alors dans sa configuration de pré-verrouillage (également appelée configuration d'attente de verrouillage), à partir de laquelle la configuration de verrouillage peut être atteinte en faisant simplement tourner le couvercle 3 relativement à la cuve 2 selon l'axe vertical X-X', ce qui a pour effet de décaler angulairement les excroissances 7A-7J du couvercle 3 et les encoches 9A-9J du rebord annulaire, réalisant un verrouillage de type « *à baïonnette ».*

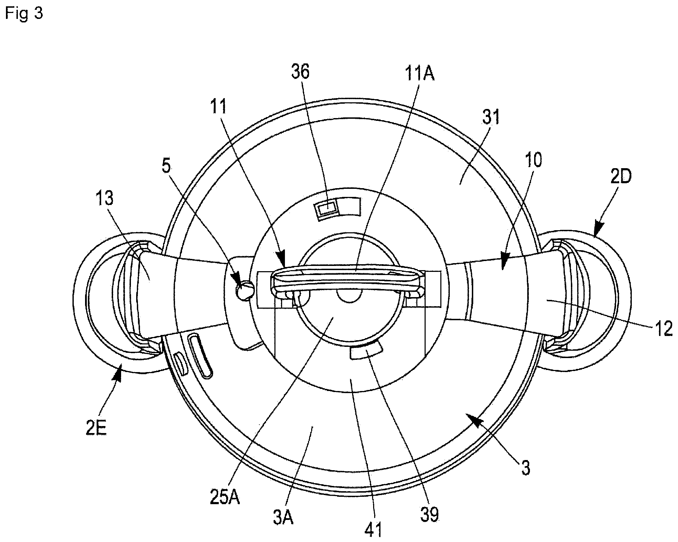

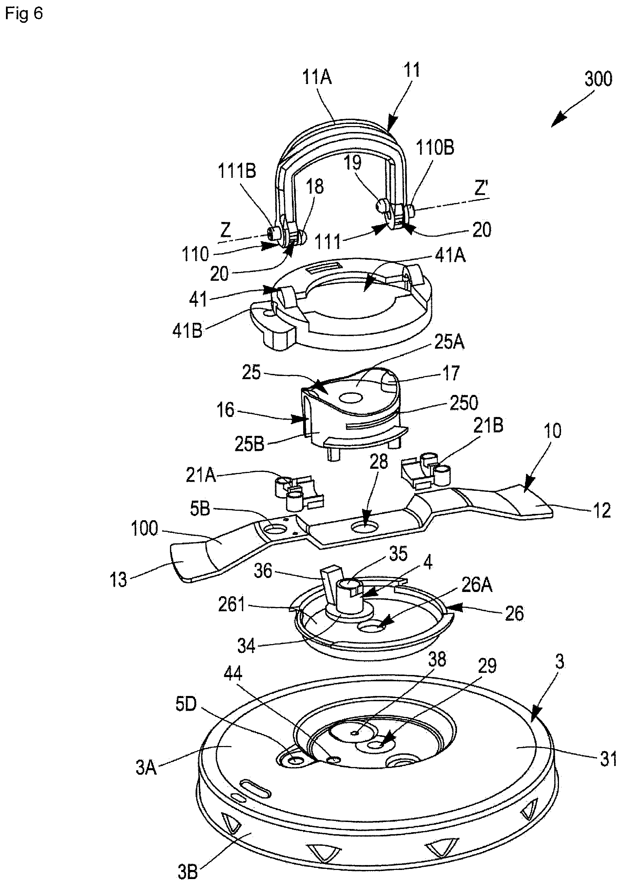

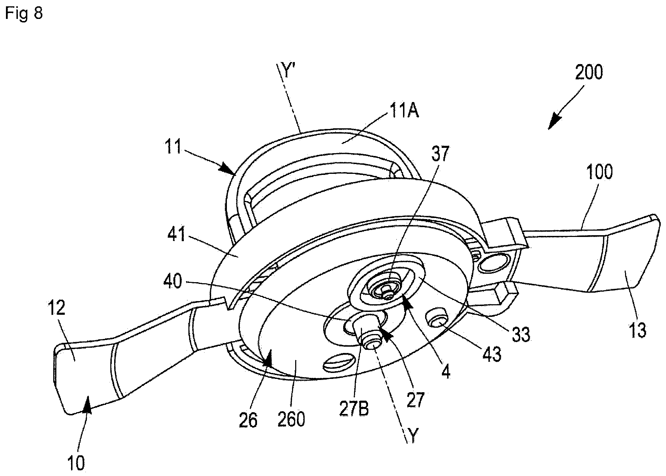

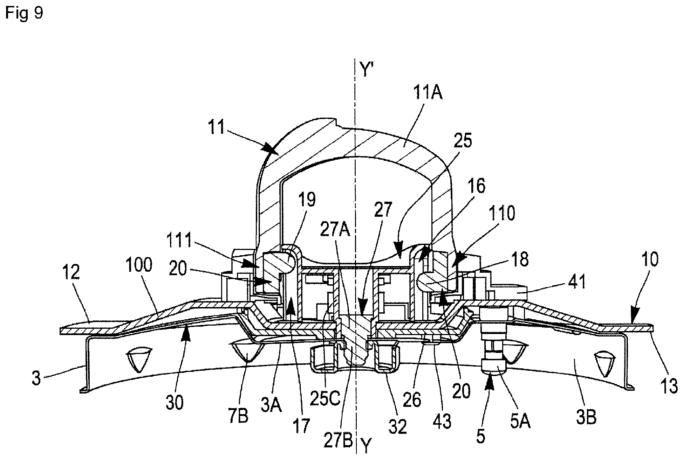

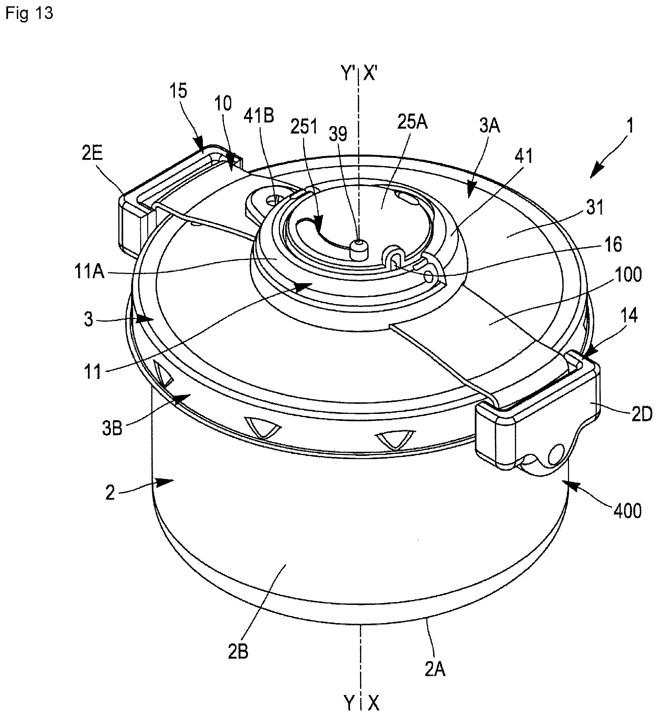

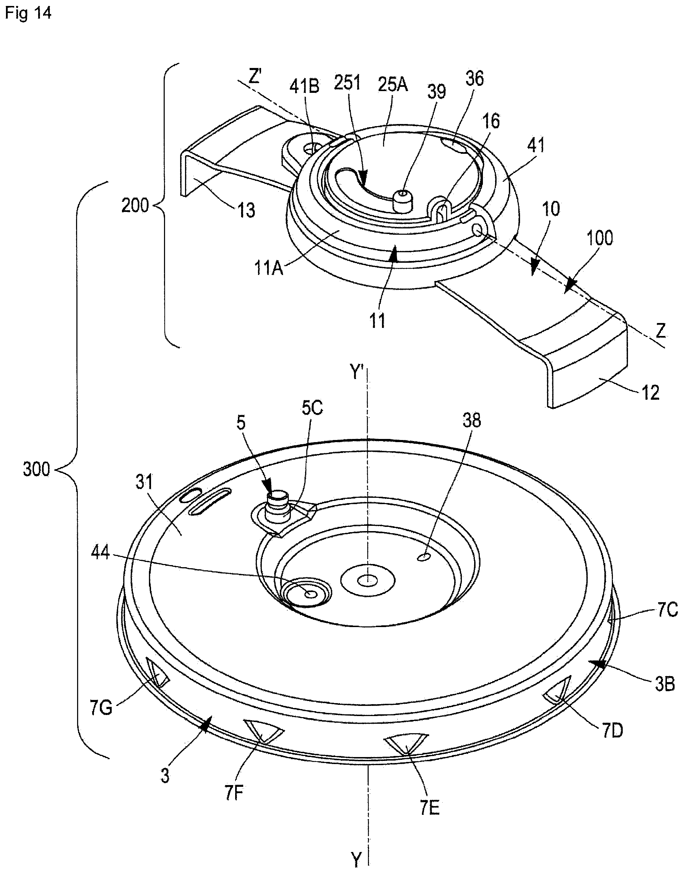

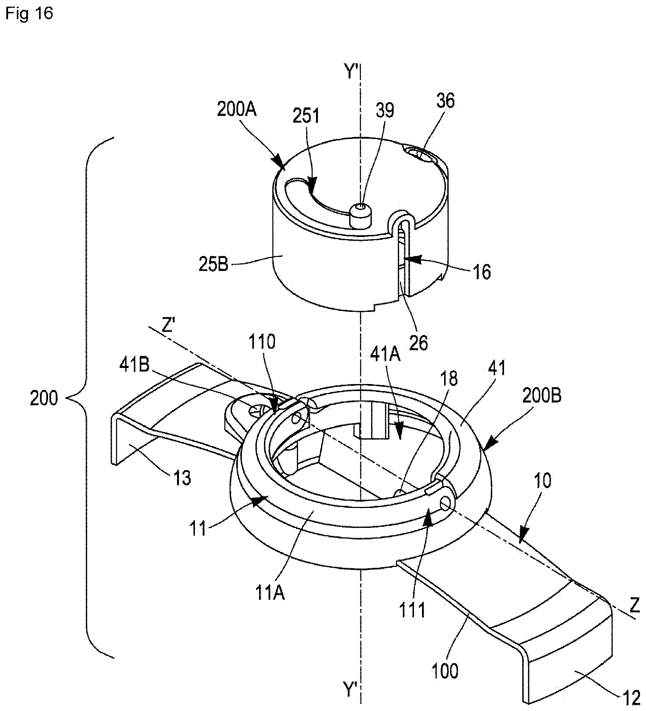

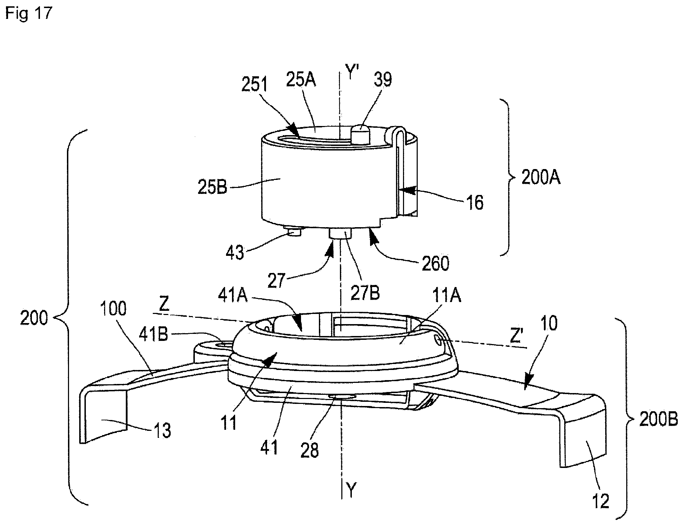

Conformément à l'invention, l'appareil 1 comprend également un support 10 destiné à être attaché audit couvercle 3, de façon amovible (figures 1 à 12) ou permanente (figures 13 à 18), de façon que ce dernier puisse pivoter relativement audit support 10 selon un premier axe de rotation Y-Y' (qui vient se confondre avec l'axe vertical central X-X' lorsque le couvercle 3 est rapporté sur la cuve 2), entre deux positions correspondant respectivement à une configuration de déverrouillage et une configuration de verrouillage. La liaison pivot entre le couvercle 3 et le support 10 peut être réalisée par tout moyen connu. Les deux positions entre lesquelles le couvercle 3 peut pivoter relativement au support 10 sont séparées par une course angulaire prédéterminée correspondant à celle requise pour faire passer l'appareil 1 de sa configuration de pré-verrouillage (configuration d'attente de verrouillage) illustrée à la figure 1 à sa configuration de verrouillage illustrée par exemple à la figure 10 et à la figure 13.

De préférence, l'appareil 1 comprend un sous-ensemble de couvercle 300 qui inclut à la fois ledit couvercle 3 et au moins ledit support 10, le sous-ensemble de couvercle 300 en configuration de déverrouillage (c'est-à-dire avec le couvercle 3 se trouvant dans une position, par rapport au support 10, qui correspond à la configuration de déverrouillage) et la cuve 2 étant conçus pour être réunis selon au moins un agencement relatif prédéterminé, qui correspond à la configuration de pré-verrouillage de l'appareil 1 susvisée, permettant audit système de verrouillage à baïonnette de verrouiller le couvercle 3 à la cuve 2 par pivotement du couvercle 3 selon ledit premier axe de rotation Y-Y', afin de faire passer le sous-ensemble de couvercle 300 de la configuration de déverrouillage à la configuration de verrouillage. En d'autres termes, la réunion du sous-ensemble de couvercle 300 en configuration de déverrouillage et de la cuve 2 selon l'agencement relatif prédéterminé (agencement de pré-verrouillage) illustré à la figure 1 entraîne un inter-verrouillage du support 10 et de la cuve 2 qui empêche en l'espèce le support 10 de tourner selon l'axe vertical central X-X' tout en reposant sur la cuve 2. Ce verrouillage de la position angulaire relative du support 10 et de la cuve 2 permet au support 10 de jouer le rôle d'un bâti fixe immobile relativement à la cuve 2 et par rapport auquel le couvercle 3 peut pivoter autour de l'axe vertical central X-X' selon une course angulaire prédéterminée pour passer d'un état déverrouillé (illustré à la figure 1) à un état verrouillé (illustré à la figure 10 et à la figure 13).

Avantageusement lesdits support 10 et cuve 2 sont pourvus respectivement de conformations de support 12, 13 et de cuve 14, 15 complémentaires destinées à coopérer, de préférence par emboîtement, lorsque le sous-ensemble de couvercle 300 en configuration de déverrouillage et la cuve 2 sont réunis selon ledit agencement relatif prédéterminé (figure 1). Ledit emboîtement des conformations complémentaires de support 12, 13 et de cuve 14, 15 permet de verrouiller la position angulaire relative du support 10 et de la cuve 2 dans un plan horizontal, c'est-à-dire un plan qui est perpendiculaire audit axe vertical central X-X'.

Dans les modes de réalisation illustrés aux figures, la cuve 2 est pourvue de deux conformations de cuve 14, 15 disposées de façon diamétralement opposée relativement à l'axe vertical central X-X'. Ces deux conformations de cuve 14, 15 sont avantageusement formées par des pièces présentant par exemple un profil sensiblement en C, comme visible aux figures. Lesdites pièces en C sont par exemple portées respectivement par les poignées de cuve 2D, 2E, et/ou font partie de ces dernières. Avantageusement, le support 10 comporte quant à lui deux conformations de support 12, 13 de formes respectives complémentaires de celles des conformations de cuve 14, 15. Les deux conformations de support 12, 13 sont disposées avantageusement de façon diamétralement opposée sur le couvercle 3 relativement au premier axe de rotation Y-Y', lesdites conformations de support 12, 13 débordant avantageusement radialement du couvercle 3 pour venir coopérer avec les conformations de cuve complémentaires 14, 15. Il est cependant parfaitement envisageable, sans pour autant que l'on sorte du cadre de l'invention, que lesdits support 10 et cuve 2 soient pourvus respectivement d'une seule conformation de support et d'une seule conformation de cuve, ou même que les support 10 et cuve 2 soient pourvus, au lieu de conformations respectives de support et de cuve destinées à coopérer par emboîtement, d'éléments d'interverrouillage d'une autre nature reposant sur la mise en œuvre d'un autre type de coopération (friction, clipsage, attraction magnétique...) pour verrouiller la position angulaire relative du support 10 et de la cuve 2. Avantageusement, chaque conformation de cuve 14, 15 forme un élément femelle, tandis que chaque conformation de support 12, 13 forme un élément mâle complémentaire dudit élément femelle, ledit élément mâle étant avantageusement destiné à être inséré dans l'élément femelle pour établir une liaison de blocage en rotation selon l'axe vertical central X-X' entre le support 10 et la cuve 2.

Avantageusement, le support 10 comprend une traverse 100 qui s'étend, de préférence sur le couvercle 3 (en étant relié à ce dernier par une liaison pivot), longitudinalement entre deux extrémités opposées qui sont de préférence des extrémités libres. La traverse 100 est avantageusement formée par une pièce sensiblement allongée qui s'étend diamétralement sur le couvercle 3. Lesdites extrémités opposées de la traverse 100 formant le support 10 débordent radialement du couvercle 2, comme illustré aux figures, pour former lesdites conformations de support 12, 13, lesquelles sont configurées pour coopérer respectivement avec des logements complémentaires formant lesdites conformations de cuve 14, 15. Par exemple, la traverse 100 se présente sous la forme d'une bande métallique rigide d'un seul tenant qui forme à ses extrémités libres des ailettes (mode de réalisation des figures 1 à 12) ou des bords tombants (mode de réalisation des figures 13 à 18) constituant les conformations de support 12, 13 complémentaires des logements 14, 15 délimités par les pièces en C solidaires de la cuve 2.

Le sous-ensemble de couvercle 300 forme ainsi un élément unitaire indépendant destiné à être associé avec un sous-ensemble de cuve 400 (formé par la cuve 2 elle-même et au moins les poignées de cuve 2D, 2E ainsi que les conformations de cuve 14, 15 avantageusement portées par ces dernières), pour former l'enceinte de cuisson. En d'autres termes, lorsque le sous-ensemble de couvercle 300 est en configuration de déverrouillage, le couvercle 3 et le support 10 sont positionnés l'un relativement à l'autre de telle manière que l'accostage du support 10 sur la cuve 2 selon une position prédéterminée, correspondant audit agencement relatif prédéterminé, permet de faire passer les rampes de couvercle 7A-7J en deçà des rampes de cuve 8A-8J par les encoches 9A-9J séparant lesdites rampes de cuve, le sous-ensemble de couvercle 300 coiffant alors la cuve 2 dans une position d'attente. Il suffira alors, à partir de cette position d'attente, de faire pivoter le couvercle 3 relativement à la cuve 2 pour verrouiller le couvercle 3 relativement à la cuve 2. En d'autres termes, une fois la cuve 2 et le sous-ensemble de couvercle 300 en configuration de déverrouillage réunis selon l'agencement relatif prédéterminé de pré-verrouillage illustré à la figure 1, il suffit de maintenir le support 10 en position relativement à la cuve 2 et de faire pivoter le couvercle 3 relativement au support 10 selon la course angulaire prédéterminée susvisée afin d'amener les rampes de couvercle 7A-7J en correspondance avec les rampes de cuve 8A-8J, sous ces dernières, verrouillant ainsi le couvercle 3 relativement à la cuve 2.

Conformément à l'invention, l'appareil de cuisson 1 comprend un organe de commande 11 du verrouillage/déverrouillage qui est actionnable manuellement, c'est-à-dire qu'il est configuré pour être manipulé directement par l'utilisateur de façon à permettre à ce dernier de contrôler le système de verrouillage à baïonnette afin de pouvoir avantageusement passer, par actionnement manuel de l'organe de commande 11, de la configuration de déverrouillage à la configuration de verrouillage et *vice-versa.* L'organe de commande 11 permet ainsi avantageusement de commander le passage de l'appareil 1 de sa configuration de pré-verrouillage (figure 1) à sa configuration de verrouillage (figures 10 et 13), et inversement. Ledit organe de commande 11 est avantageusement monté mobile relativement au support 10 entre une première et une deuxième position correspondant respectivement au déverrouillage et au verrouillage du couvercle 3 relativement à la cuve 2. Plus précisément, l'organe de commande 11 est destiné à être attaché au support 10, de façon permanente (comme illustré aux figures) ou amovible, par une liaison mécanique autorisant le déplacement manuel de l'organe de commande 11 relativement au support 10 entre la première position et la deuxième position correspondant respectivement au déverrouillage (figure 1) et au verrouillage (figures 10 et 13) du couvercle 3 relativement à la cuve 2. En d'autres termes, l'organe de commande 11 est avantageusement fixé au support 10, de manière amovible ou permanente, tout en conservant une faculté de mobilité relativement à ce dernier, de sorte qu'un utilisateur peut entraîner manuellement en déplacement l'organe de commande 11 relativement au support 10 de la première position à la deuxième position et inversement.

L'appareil 1 selon l'invention comporte en outre un dispositif de transformation dudit déplacement manuel de l'organe de commande 11 en pivotement du couvercle 3 relativement au support 10. En d'autres termes, l'organe de commande 11 est connecté au couvercle 3 par le dispositif de transformation. L'utilisateur peut ainsi commander le passage de la configuration de déverrouillage à la configuration de verrouillage, et *vice-versa,* par déplacement manuel de l'organe de commande 11 relativement au support 10 entre ses première et deuxième positions, et inversement. Le dispositif de transformation est donc configuré pour convertir le mouvement de l'organe de commande 11 relativement au support 10 en mouvement rotatif du couvercle 3 relativement à ce même support 10, en l'espèce selon le premier axe Y-Y', de sorte que l'utilisateur peut ainsi commander le verrouillage/déverrouillage par pivotement du couvercle 3 relativement au support 10 par simple manipulation de l'organe de commande 11, une fois le couvercle 3 rapporté sur la cuve 2 avec les rampes de couvercle 7A-7J disposées en deçà des rampes de cuves 8A-8J. Grâce à l'interaction entre le support 10 et la cuve 2, réalisée avantageusement au moyen de la coopération des conformations de support 12, 13 et de cuve 14, 15, le support 10 est empêché de pivoter relativement à la cuve 2, en l'espèce selon ledit axe vertical central X-X', lorsque l'organe de commande 11 est déplacé entre ses première et deuxième positions (ou inversement).

Comme illustré aux figures, le dispositif de transformation comprend au moins une conformation motrice 18, 19 destinée à être portée par l'organe manuel de commande 11 et au moins une conformation réceptrice 16, 17 destinée à être reliée au couvercle 3 et à être engagée par ladite conformation motrice 18, 19. Selon le premier mode de réalisation des figures 1 à 12, le dispositif de transformation comprend d'une part deux conformations réceptrices 16, 17 fixées au couvercle 3 et disposées à distance l'une de l'autre, et d'autre part deux conformations motrices 18, 19 distantes l'une de l'autre et toutes deux portées par l'organe de commande 11, de préférence en différents emplacements de ce dernier. Dans le deuxième mode de réalisation des figures 13 à 18, le dispositif de transformation comprend une seule conformation motrice 18 qui engage une seule conformation réceptrice 16. L'invention n'est bien entendu pas limitée à un nombre spécifique de conformations motrices et réceptrices, ni à une forme spécifique desdites conformations motrices et réceptrices.

Dans le premier mode de réalisation correspondant aux figures 1 à 12, l'appareil 1 comprend un dispositif de liaison débrayable 42 assurant une liaison mécanique débrayable entre l'organe de commande et chaque conformation motrice 18, 19, pour permettre, dans certaines situations anormales, une possibilité de déplacement relatif entre l'organe de commande 11 et chaque conformation motrice 18, 19 portée par ce dernier. Le dispositif de liaison débrayable 42 sera décrit plus en détail dans ce qui suit. Selon le mode de réalisation alternatif qui correspond aux figures 13 à 18, chaque conformation motrice 18 vient de matière avec l'organe de commande 11 et forme avec ce dernier une seule et même pièce monobloc d'un seul tenant, sans possibilité de déplacement relatif entre l'organe de commande 11 et la (ou les) conformation(s) motrice(s) 18.

Avantageusement, l'une desdites conformations réceptrices 16, 17 et motrices 18, 19 forme une conformation femelle, tandis que l'autre desdites conformations réceptrices 16, 17 forme une conformation mâle destinée à être logée dans ladite conformation femelle. Avantageusement, chaque conformation mâle peut coulisser dans la conformation femelle au sein de laquelle elle est respectivement logée, selon une direction de coulissement sensiblement parallèle audit premier axe de rotation Y-Y', c'est-à-dire une direction de coulissement avantageusement verticale. Dans ce mode de réalisation préférentiel, chaque conformation femelle se présente par exemple sous la forme d'une cavité ou d'une lumière oblongue qui assure un guidage longitudinal de la conformation mâle qui y est insérée, tout en autorisant ladite conformation mâle à pivoter sur elle-même. Un tel agencement s'avère extrêmement simple et fiable, et permet de mettre en œuvre un organe de commande 11 monté à pivotement selon un deuxième axe différent du premier axe de rotation Y-Y'.

Lorsque, comme dans l'exemple des figures 1 à 12, le dispositif de transformation comprend une pluralité de conformations réceptrices 16, 17 destinées à coopérer avec une pluralité de conformations motrices 18, 19 conjuguées, l'une desdites pluralité de conformations réceptrices 16, 17 et pluralité de conformations motrices 18, 19 forme une pluralité de conformations femelles, tandis que l'autre desdites pluralité de conformations réceptrices 16, 17 et pluralité de conformations motrices 18, 19 forment une pluralité de conformations mâles destinées à être respectivement logées dans les conformations femelles correspondantes. Dans les exemples illustrés aux figures, chaque conformation mâle est formée par une conformation motrice 18, 19, tandis que chaque conformation femelle complémentaire dans laquelle vient se loger une conformation mâle est formée par une conformation réceptrice 16, 17. Une configuration inverse est cependant parfaitement envisageable sans pour autant que l'on sorte du cadre de l'invention. Avantageusement, la coopération entre chaque conformation motrice 18, 19 et chaque conformation réceptrice, 16, 17 correspondante présente un caractère réversible, c'est-à-dire que les conformations réceptrices 16, 17 et motrices 18, 19 peuvent être avantageusement accouplées et désaccouplées, par exemple sous l'effet d'une action de l'utilisateur sur l'appareil 1. En d'autres termes, les conformations réceptrices 16, 17 et motrices 18, 19 forment, lorsqu'elles sont accouplées, c'est-à-dire lorsque chaque conformation réceptrice 16, 17 est engagée par une conformation motrice 18, 19 correspondante, un mécanisme d'entraînement qui permet d'impartir au couvercle 31 un effort de mise en rotation en réponse au déplacement de l'organe de commande 11 sous l'effet d'un actionnement manuel de l'utilisateur. Dans les exemples illustrés aux figures, chaque conformation motrice 18, 19 est avantageusement formée par un pion tandis que chaque conformation réceptrice 16, 17 est formée par une cavité conjuguée qui reçoit le pion correspondant. L'invention n'est toutefois absolument pas limitée à cet exemple particulier, et il est alternativement tout à fait envisageable que chaque conformation motrice soit par exemple formée par une roue dentée tandis que chaque conformation réceptrice est formée par une crémaillère qui coopère avec ladite roue dentée.

Selon les modes de réalisation préférentiels illustrés aux figures, l'organe de commande 11 est avantageusement monté à pivotement relativement au support 10 selon un deuxième axe de rotation Z-Z'. De préférence, afin de favoriser l'ergonomie de commande, le deuxième axe de rotation Z-Z' est parallèle à une direction sécante audit premier axe de rotation Y-Y', et de préférence est perpendiculaire audit premier axe de rotation Z-Z', comme illustré aux figures. Avantageusement, l'organe de commande 11 est monté à pivotement relativement au support 10 entre d'une part une position déployée (première position précitée) correspondant à la configuration de déverrouillage et dans laquelle ledit organe de commande 11 fait saillie verticalement, en l'espèce au droit du couvercle 3 vers l'extérieur, et d'autre part une position rétractée (deuxième position précitée) qui correspond à la configuration de verrouillage et dans laquelle ledit organe de commande 11 est rabaissé vers le couvercle 3. De préférence, dans sa position déployée, l'organe de commande 11 s'étend selon une direction moyenne sensiblement parallèle audit axe vertical central X-X' (ainsi qu'au premier axe Y-Y') tandis qu'en position rétractée, il s'étend avantageusement selon une direction moyenne sensiblement perpendiculaire audit axe vertical central X-X', comme illustré aux figures. Dans ce mode de réalisation préférentiel, l'organe de commande 11 présente ainsi un caractère escamotable lui permettant de s'effacer lorsqu'il se retrouve dans sa position rétractée.

Avantageusement, et comme illustré aux figures, l'organe de commande 11 comprend une anse 11A, qui se présente donc sous la forme d'une pièce arquée, en forme de boucle ou d'arche, configurée pour pouvoir être saisie fermement, de préférence à pleine main ou à tout le moins entre le pouce et plusieurs doigts, par un utilisateur. L'invention n'est bien entendu pas limitée à la mise en œuvre d'une anse pour former l'organe de commande 11, et ce dernier peut par exemple être constitué alternativement par un levier sensiblement rectiligne, ou avec un profil en forme de T, de L, une forme de pommeau, de bouton évasé, etc. Ladite anse 11A s'étend entre deux extrémités 110, 111 traversées par ledit deuxième axe de rotation Z-Z'. En d'autres termes, l'anse 11A présente avantageusement une forme sensiblement en U ou en C et est articulée relativement au support 10 au niveau desdites extrémités 110, 111.

De préférence, ladite au moins une conformation motrice 18, 19 est portée par l'une desdites extrémités 110, 111.

Dans le mode de réalisation des figures 1 à 12, lesdites deux extrémités 110, 111 portent ainsi chacune une conformation motrice 18, 19. Par exemple, chaque extrémité 110, 111 de l'anse 11A forme avantageusement un oreillon respectif 110A, 111A, lequel porte par exemple un tourillon respectif 110B, 111B qui coopère avec un palier respectif 21A, 21B pour le montage de l'anse 11A à rotation selon le deuxième axe de rotation Z-Z'. Les paliers 21A, 21B sont eux-mêmes avantageusement fixés au support 10 par tous moyens appropriés (vissage ou autre). Comme illustré aux figures, chaque oreillon 110A, 111A présente avantageusement une face interne disposée vers l'intérieur de l'anse, en regard de la face interne de l'autre oreillon, et une face externe opposée, à partir de laquelle le tourillon 110B, 111B correspondant s'étend, vers l'extérieur, coaxialement au deuxième axe de rotation Z-Z'. Dans le mode de réalisation des figures 1 à 12, chaque conformation motrice 18, 19 est portée par une pièce intermédiaire respective 18A, 19A montée à rotation, selon le deuxième axe Z-Z', sur l'oreillon correspondant 110A, 111A. La faculté de rotation de chaque pièce intermédiaire 18A, 19A relativement à l'oreillon respectif 110A, 111A qui la porte est avantageusement inhibée par un verrou. Ce dernier est par exemple formé par une cavité 22 ménagée à la surface de chaque pièce intermédiaire 18A, 19A pour former une gâche, et un pêne 23, 24 correspondant monté à coulissement élastique dans chaque branche de l'anse 11A, au sein d'un logement respectif 23A, 24A formé par une cavité qui débouche au niveau de l'oreillon 110A, 111A respectif. Ce verrou réversible fait avantageusement partie du dispositif de liaison débrayable 42 susvisée. Il permet une fonction de débrayage qui sera exposée plus en détail dans ce qui suit.

Alternativement, selon le mode de réalisation des figures 13 à 18, la conformation motrice 18 (unique) est portée par une seule extrémité 111 et vient de matière avec la face interne de l'anse 11A qui la porte, en faisant saillie vers l'intérieur.

Conformément à l'invention, l'appareil 1 comprend un module de commande 200 attaché de façon amovible au couvercle 3. Comme sa dénomination l'indique, le module de commande 200 embarque au moins en partie un ou plusieurs moyens permettant de commander ou contrôler le fonctionnement de l'appareil 1. De préférence, le module de commande 200 embarque ledit support 10.

Le module de commande 200 peut être attaché de façon amovible au couvercle 3 par tous moyens connus, et par exemple par emboîtement élastique, vissage (comme dans les exemples illustrés aux figures) ou tout autre moyen de fixation mécanique. Par exemple, l'appareil 1 comprend une tige d'assemblage 27 qui est avantageusement embarquée par le module de commande 200 et fait saillie de ce dernier, l'appareil 1 comprenant également un orifice central de fixation 29 ménagé à travers le couvercle 3 et à travers lequel ladite tige 27 est destinée à passer pour attacher le module de commande 200 au couvercle 3, en coopération par exemple avec un écrou 32 si la tige 27 est filetée au moins vers son extrémité libre.

Plus précisément, le module de commande 200 embarque au moins un premier sous-ensemble 200A, lequel inclut au moins le moyen de régulation de pression 4 et la (ou les) conformation(s) réceptrice(s) 16, 17. En d'autres termes, le module de commande 200 se présente sous la forme d'un ensemble unitaire qui incorpore lui-même un premier sous-ensemble 200A, lequel embarque lui-même à la fois le moyen de régulation de pression 4 et ladite au moins une conformation réceptrice 16, 17. Grâce au caractère détachable du module de commande 200, il est possible de séparer à la fois le moyen de régulation de pression 4 et ladite au moins une conformation réceptrice 16, 17 du couvercle 3. Ceci permet de faciliter le nettoyage du couvercle 3, qui peut être lavé à grande eau ou placé dans un lave-vaisselle sans risquer de détériorer le moyen de régulation de pression 4, qui est un élément technique potentiellement fragile et qui présente un caractère sécuritaire. En outre, en raison du fait que le module de commande 200 embarque également au moins une partie du dispositif de transformation, c'est-à-dire au moins une partie du mécanisme permettant de transformer le déplacement manuel de l'organe de commande 11 en pivotement du couvercle 3 relativement au support 10, l'utilisateur est dans l'impossibilité de contrôler le verrouillage / déverrouillage lorsque le module de commande 200 est détaché du couvercle 3. Dans ce cas en effet le déplacement manuel de l'organe de commande 11 ne peut pas être communiqué, sous forme d'un couple d'entraînement, au couvercle 3. Ceci permet de limiter les risques d'une utilisation impropre de l'appareil 1, en l'absence du module de commande 200. De la même façon, grâce au fait que le moyen de régulation de pression 4 est embarqué dans le module de commande 200, le couvercle 3 est alors incapable de former une enceinte de cuisson étanche avec la cuve 2, car l'orifice de fuite 38 ne communique pas avec le moyen de régulation de pression 4 lorsque le module de commande 200 est séparé du couvercle 3. Cela contribue également à garantir la sécurité de l'appareil 1 lorsque le couvercle 3 est dépourvu du module de commande 200.

Avantageusement, le dispositif de transformation du déplacement manuel de l'organe de commande 11 en pivotement du couvercle 3 comprend un moyeu 25 destiné à être attaché au couvercle 3 coaxialement audit premier axe de rotation Y-Y', ledit moyeu 25 portant ladite au moins une conformation réceptrice 16, 17 conformément au mode de réalisation illustré aux figures. Comme illustré, ledit moyeu 25 forme, de préférence à sa périphérie, ladite au moins une conformation réceptrice 16, 17. Chaque conformation réceptrice 16, 17 est donc embarquée avantageusement par le moyeu 25 et forme avec ce dernier une seule et même pièce d'un seul tenant. Le moyeu 25 est destiné à être fixé directement ou indirectement au couvercle 3, de préférence sans faculté de mobilité en rotation entre le couvercle 3 et le moyeu 25 de façon que tout effort d'entraînement en rotation du moyeu 25 selon le premier axe Y-Y' soit directement transmis au couvercle 3. Avantageusement, le moyeu 25 forme un capot qui contribue à délimiter un logement accueillant ledit moyen de régulation de pression 4. À cette fin, le moyeu 25 présente par exemple une forme de cloche avec une paroi supérieure 25A et une paroi latérale annulaire 25B, à la surface de laquelle sont ménagées au moins une (figures 13 à 18) ou deux (figures 1 à 12) cavité(s) allongée(s) qui s'étend(ent) verticalement et forme(nt) la ou les conformation(s) réceptrice(s) 16, 17. Le moyen de régulation de pression 4 est avantageusement disposé au moins en partie sous le capot 25, c'est-à-dire sous la paroi supérieure 25A, ce qui permet de le dissimuler tout en le disposant à proximité immédiate du centre du couvercle 3, c'est-à-dire en un emplacement où la course en rotation relativement au support 10 est minimale. Cet agencement s'avère avantageux pour l'implantation d'éléments fonctionnels complémentaires susceptibles de coopérer par exemple avec le moyen de régulation de pression 4 et d'être à cette fin disposés par exemple sur la paroi supérieure 25A. Avantageusement, l'appareil 1 comprend également une platine 26 destiné à être disposée sur le couvercle 3 et sous le moyeu 25, de préférence pour contribuer à former avec ce dernier ledit logement accueillant le moyen de régulation de pression 4. La platine 26 est avantageusement fixée de préférence de façon permanente au moyeu 25, et est destinée à être fixée, de préférence de façon amovible, au couvercle 3, pour transmettre à ce dernier les efforts de rotation selon le premier axe Y-Y' communiqués au moyeu 25 par l'intermédiaire de la coopération entre la ou les conformation(s) motrice(s) 18, 19 et la ou les conformation(s) réceptrice(s) 16, 17 portées par le moyeu 25. Le moyen de régulation de pression 4 est ainsi avantageusement portée par la platine 26 tout en étant coiffé au moins en partie par le moyeu 25.

Avantageusement, le premier sous-ensemble 200A inclut ladite platine 26, laquelle est dès lors également embarquée par le module de commande 200. La platine 26 et le moyeu 25 forment ainsi avantageusement un boîtier unitaire au sein duquel est disposé le moyen de régulation de pression 4, ledit boîtier unitaire formant également, sur la face latérale 25B du moyeu 25, une ou plusieurs conformations réceptrices 16, 17 destinées à être engagées par les conformations motrices 18, 19 lorsque le module de commande 200 est rapporté sur le couvercle 3 et attaché à ce dernier.

Avantageusement, l'appareil 1 comprend un deuxième sous-ensemble 200B qui inclut au moins l'organe de commande 11, ladite au moins une conformation motrice 18, 19 ainsi que le support 10. Le deuxième sous-ensemble 200B est avantageusement destiné à être monté à pivotement par rapport audit premier sous-ensemble 200A selon ledit premier axe de rotation Y-Y'. Dans les modes de réalisation illustrés aux figures, le pivotement relatif des premier et deuxième sous-ensembles 200A, 200B est commandé par actionnement manuel de l'organe de commande 11, pour entraîner le déplacement de ce dernier relativement au support 10.

Dans le premier mode de réalisation des figures 1 à 12, lesdits premier et deuxième sous-ensembles 200A, 200B sont attachés l'un à l'autre de façon permanente, de sorte qu'ils forment avantageusement le module de commande 200.

Selon le deuxième mode de réalisation correspondant aux figures 13 à 18, les premier et deuxième sous-ensembles 200A, 200B sont attachés l'un à l'autre de façon amovible.

L'invention concerne dès lors plusieurs cas de figures, et en particulier les cas de figures suivants :
- Le module de commande 200 embarque également, en plus du premier sous-ensemble 200A, le deuxième sous-ensemble 200B. Cette variante peut elle-même se décliner en une première sous-variante selon laquelle les premier et deuxième sous-ensembles 200A, 200B sont attachés l'un à l'autre de manière permanente, comme c'est le cas par exemple dans l'appareil 1 des figures 1 à 12 où les premier et deuxième sous-ensembles 200A, 200B ne sont pas prévus pour être détachables l'un de l'autre. Selon une deuxième sous-variante, les premier et deuxième sous-ensembles 200A, 200B sont attachés l'un à l'autre de façon amovible, de sorte que non seulement le module de commande 200 peut être détaché du couvercle, mais en outre les premier et deuxième sous-ensembles 200A, 200B qui composent le module de commande 200 en question peuvent eux-mêmes être séparés l'un de l'autre.
- Le module de commande 200 embarque uniquement le premier sous-ensemble 200A, lequel est fixé de façon amovible au deuxième sous-ensemble 200B qui est lui-même attaché par exemple de façon permanente au couvercle 3. Dans cette variante de réalisation, qui est illustrée aux figures 13 à 18, le deuxième sous-ensemble 200B est attaché de façon permanente mais avec une faculté de mobilité relative (par exemple par un système de goujon et glissière non représenté) au couvercle 3, tandis que le premier sous-ensemble 200A, qui forme le module de commande 200, est attaché de façon amovible au deuxième sous-ensemble 200B.

Il est à noter que ce dernier mode de réalisation est particulièrement avantageux lorsqu'il est mis en œuvre avec un organe de commande 11 formé par une anse pivotante entre les extrémités de laquelle est disposé le premier sous-ensemble 200A qui forme en l'espèce le module de commande 200. En effet, dans ce cas, le module 200 est plus difficile à séparer du deuxième sous-ensemble 200B lorsque l'anse 11A est déployée (position de déverrouillage) que lorsqu'elle est rabattue (position de verrouillage). L'utilisateur est donc incité à rabattre l'anse 11A pour détacher le premier sous-ensemble 200A du deuxième sous-ensemble 200B. Ce faisant, il amène le sous-ensemble unitaire formé par l'association du deuxième sous-ensemble 200B et du couvercle 3 dans une configuration de verrouillage qui empêche l'utilisateur de repositionner le couvercle 3 sur la cuve 2 dans une position fonctionnelle. Ceci constitue une sécurité supplémentaire d'utilisation. L'utilisateur devra en effet, pour pouvoir ramener le sous-ensemble de couvercle 300 en configuration de déverrouillage, réinstaller tout d'abord le module de commande 200 (formé en l'espèce par le premier sous-ensemble 200A) puis relever l'anse 11A, ce qui occasionnera la rotation du moyeu 25 entraînant elle-même la rotation du couvercle 3 de sa configuration de verrouillage à sa configuration de déverrouillage autorisant le placement du couvercle 3 sur la cuve 2 dans une position adéquate.

Dans le premier mode de réalisation des figures 1 à 12, la traverse 100 qui forme de préférence le support 10 est disposée entre la platine 26 et le moyeu 25, de sorte que la traverse 100 d'une part et le sous-ensemble formé par la platine 26 et le moyeu 25 d'autre part présentent une faculté de rotation relative selon le premier axe de rotation Y-Y'. Le moyeu 25 est de préférence fixé à la platine 26, par exemple par vissage, emboîtement élastique, ou tout autre moyen, avec la traverse 100 interposée et capturée entre le moyeu 25 et la platine 26. Dans le deuxième mode de réalisation des figures 13 à 18, la traverse 100 est au contraire disposée sous la platine 26, de façon à être interposée entre le couvercle 3 et la platine 26.

Dans l'un (figures 1 12) ou l'autre (figures 13 à 18) cas, lesdits moyeu 25 et platine 26 forment ainsi le premier sous-ensemble 200A, tandis que lesdits organes de commande 11 et traverse 100 forment le deuxième sous-ensemble 200B, lesdits premier et deuxième sous-ensembles 200A, 200B étant assemblés l'un à l'autre avec une faculté de pivotement relative selon le premier axe Y-Y'. Le moyen de régulation de pression 4 fait partie du premier sous-ensemble 200A puisqu'il est embarquée de préférence par la platine 26. Par exemple, la platine 26 se présente sous la forme d'une coupelle, de préférence en matière plastique, pourvue d'un orifice 26A destiné à être disposé coaxialement à un orifice central 29 ménagé à travers le couvercle 3. La coupelle 26 présente avantageusement une face inférieure 260 destinée à venir en regard de la face externe 31 du couvercle 3, et une face supérieure 261 opposée. Un orifice de soupape est ménagé à travers la coupelle entre les faces inférieure 260 et supérieure 261 de cette dernière. Cet orifice est entouré, sur la face inférieure 260, par un joint d'étanchéité 33 (non illustré pour la variante des figures 13 à 18) et il débouche, du côté de la face supérieure 261, dans une chambre 34 qui elle-même communique d'une part avec un puits 35 et d'autre part avec un conduit d'échappement 36. Le puits 35 accueille un dispositif de soupape à poids ou à ressort (non visible aux figures pour la variante des figures 13 à 18), équipé par exemple d'un clapet mobile 37 monté mobile à coulissement selon une direction parallèle au premier axe de rotation Y-Y', ledit clapet 37 étant rappelé (sous l'effet de la gravité ou d'une force exercée par un corps élastique, du genre ressort) dans une position basse. Le clapet 37 passe à travers l'orifice ménagé dans la coupelle formant la platine 26 pour venir obturer un orifice de fuite 38 ménagé à travers le couvercle 3 et qui communique de manière étanche, grâce à la garniture d'étanchéité 33, avec la chambre 34. Le clapet 37 est ainsi sensible à la pression régnant dans l'enceinte de cuisson et vient alternativement obturer ou libérer l'orifice de fuite 38 pour réguler le niveau de pression régnant dans l'enceinte. Lorsque le niveau de pression régnant dans l'enceinte excède la pression de fonctionnement prédéterminé, le clapet 37 se soulève ce qui permet à la vapeur contenue dans l'enceinte de cuisson de gagner tout d'abord la chambre 34 puis de s'échapper par le conduit d'échappement 36 vers l'extérieur. Avantageusement, l'appareil 1 comprend en outre un dispositif de tarage du moyen de régulation de pression 4, qui permet de régler le niveau de la pression de fonctionnement auquel la soupape 4 se déclenche, c'est-à-dire le seuil de pression à partir duquel le clapet 37 est repoussé hors de sa position de rappel pour libérer l'orifice de fuite 38. Le dispositif de tarage, qui peut être de tout type connu (et agit par exemple sur la compression du ressort de rappel du clapet 37), est avantageusement relié à un dispositif de commande manuelle 39. Ce dernier se présente par exemple sous la forme d'une patte montée à pivotement selon le premier axe de rotation Y-Y' et s'étendant entre deux extrémités dont l'une est reliée à la soupape formant avantageusement le moyen de régulation de pression 4 pour agir sur le tarage de cette dernière et l'autre à un curseur (variante des figures 1 à 12), bouton (variante des figures 13 à 18) ou levier actionnable manuellement. Selon le mode de réalisation des figures 1 à 12, ladite patte traverse par exemple la paroi latérale 25B du moyeu 25, en passant à travers une fente 250 ménagée à travers ladite paroi latérale 25B. Dans le mode de réalisation des figures 13 à 18, la patte reste disposée sous la paroi supérieure 25A du moyeu 25, laquelle est pourvue d'une fente 251 à travers laquelle passe un bouton de commande destiné à être actionné manuellement. Bien entendu, le recours à un moyen de régulation de pression 4 dont le tarage est réglable est tout à fait facultatif et il est parfaitement envisageable de recourir à une soupape de régulation dont le tarage ne peut pas être modifié par l'utilisateur.

Avantageusement, le dispositif de transformation inclut un premier et un deuxième organe de transmission complémentaires 43, 44 embarqués respectivement par le premier sous-ensemble 200A et le couvercle 3, et qui sont destinés à coopérer pour permettre l'entraînement en rotation selon ledit premier axe de rotation Y-Y' dudit couvercle 3 par ledit premier sous-ensemble 200A. En d'autres termes, la coopération des organes de transmission complémentaire 43, 44 permet d'immobiliser le premier sous-ensemble 200A en rotation selon le premier axe de rotation Y-Y' par rapport au couvercle 3, lorsque le module de commande 200 est rapporté sur le couvercle 3 et attaché à ce dernier. Par exemple, le premier organe de transmission 43 comprend un pion solidaire de la platine 26 (et qui vient par exemple de matière avec cette dernière) et disposé à distance du premier axe de rotation Y-Y'. Le pion 43 fait avantageusement saillie vers le bas de la face inférieure 260 de la platine 26, et il est destiné à être inséré dans un orifice de blocage 44 correspondant ménagé à travers le couvercle 3, et dont les dimensions sont conjuguées à celle du pion 43. L'orifice de blocage 44 forme ainsi le deuxième organe de transmission. Grâce à cette coopération du pion 43 et de l'orifice de blocage 44, les efforts de rotation selon le premier axe Y-Y' exercés sur le premier sous-ensemble 200A, et donc sur la platine 26, par l'intermédiaire du moyeu 25 auquel cette dernière est fixée, sont communiqués au couvercle 3. Un joint torique (non illustré), ou tout autre système d'étanchéité, est avantageusement agencé autour du pion 43, pour empêcher toute communication intempestive de l'intérieur de l'enceinte avec l'extérieur par l'orifice de blocage 44.

Avantageusement, ledit premier sous-ensemble 200A embarque ladite tige d'assemblage 27, laquelle fait par exemple saillie de la platine 26, de préférence vers le bas et coaxialement au premier axe de rotation Y-Y'. Ladite tige d'assemblage 27 présente par exemple une portion interne 27A disposée au sein dudit premier sous-ensemble 200A et passant à travers un orifice 28 ménagé à travers ladite traverse 100 pour que ledit deuxième sous-ensemble 200B pivote autour de ladite portion interne 27A selon ledit premier axe de rotation Y-Y'. La tige 27 présente également de préférence une portion libre filetée 27B passant à travers l'orifice central 29 de fixation ménagé à travers le couvercle 3, de préférence au centre de ce dernier, ladite portion libre filetée 27B coopérant avec un écrou 32 (non illustré pour la variante des figures 13 à 18) pour fixer ledit premier sous-ensemble 200A au couvercle 3.

Dans le premier mode de réalisation des figures 1 à 12, la tige d'assemblage 27 sert à fixer à la fois le premier et le deuxième sous-ensemble 200A, 200B, qui forment dans ce cas avantageusement le module de commande 200, au couvercle 3. Dans ce premier mode de réalisation, ladite tige d'assemblage 27 comprend avantageusement une tête évasée, tandis que le moyeu 25 comprend un tube 25C qui s'étend sensiblement coaxialement au premier axe de rotation Y-Y' et qui traverse l'orifice 28 ménagé à travers le support 10 et l'orifice 26A ménagé à travers la platine 26 pour venir en appui contre la face externe 31 du couvercle 3, coaxialement à l'orifice 29 ménagé à travers le couvercle 3. La tige 27 est avantageusement enfilée dans le tube 25C en question, lequel présente une restriction de section formant un épaulement contre lequel la tête de la tige 27 est destinée à venir en appui. La portion interne 27A est ainsi disposée du côté de la face externe 31 du couvercle 3, tandis que la portion libre filetée 27B est destinée à passer à travers l'orifice central 29 ménagé à travers le couvercle 3, pour venir coopérer avec l'écrou 32. Un joint torique 40, ou tout autre système d'étanchéité, est enfilé sur la tige 27 pour assurer une étanchéité lorsque le deuxième sous-ensemble 200A est fixé sur le couvercle 3.

Dans le deuxième mode de réalisation des figures 13 à 18, la tige d'assemblage 27 sert uniquement à assembler de manière réversible le premier sous-ensemble 200A, qui forme avantageusement à lui seul le module de commande 200, au sous-ensemble de couvercle formé en l'espèce par le couvercle 3 et le deuxième sous-ensemble 200B qui est attaché, par d'autres moyens, de façon permanente au couvercle 3. Dans ce cas, la tige 27 passe par exemple par l'orifice 28 ménagé à travers la traverse 100, de façon à permettre une rotation relative du premier sous-ensemble 200A et du deuxième sous-ensemble 200B autour de la tige 27, selon le premier axe Y-Y'.

Lesdits premier et deuxième sous-ensembles 200A, 200B sont avantageusement assemblés entre eux et forment ainsi un module unitaire de commande 200 fixé de façon amovible au couvercle 3, en l'espèce au moyen desdits tige d'assemblage 27 et écrou 32.

Avantageusement, le deuxième sous-ensemble 200B comprend également une couronne 41 qui forme un capot supérieur annulaire avec un orifice central 41A. Dans le premier mode de réalisation des figures 1 à 12, la couronne 41 vient avantageusement coiffer la platine 26, la traverse 100, les paliers 21A, 21B et les tourillons 110B, 111B, tout en laissant émerger par son orifice 41A le moyeu 25. Dans le deuxième mode de réalisation des figures 13 à 18, la couronne 41 forme là encore un capot supérieur annulaire qui porte l'anse 11A, laquelle est embarquée sur la couronne 41 et montée à rotation relativement à cette dernière. Le premier sous-ensemble 200A, qui inclut en l'espèce au moins le moyeu 25 et la platine 26, est inséré dans l'orifice central 41A ménagé par la couronne 41 et l'anse 11A rabattue. Dans ce cas, la conformation réceptrice 16 est formée par une gorge qui débouche librement à son extrémité inférieure, de façon à permettre au pion qui forme avantageusement la conformation motrice 18 de pouvoir venir s'insérer à coulissement dans la gorge en question, lorsque le premier sous-ensemble 200A est rapporté dans l'orifice central 41A de la couronne 41.

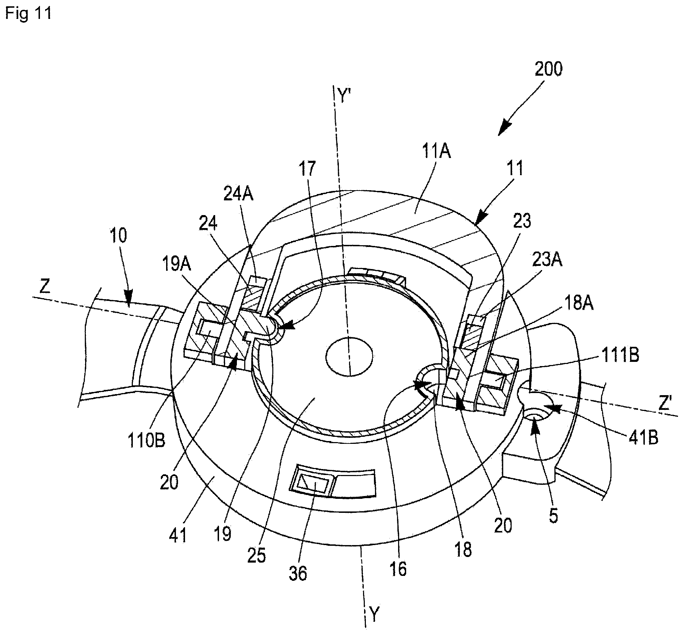

Avantageusement, le moyen de sécurité à l'ouverture 5 évoqué précédemment est sensible à la pression régnant dans l'enceinte de cuisson. Il est ainsi susceptible d'évoluer, sous l'effet du niveau de pression régnant dans l'enceinte de cuisson, entre différentes positions. En particulier, le moyen de sécurité à l'ouverture 5 est susceptible d'occuper une position de blocage (cf. figures 11 et 12) dans laquelle il empêche le déverrouillage du couvercle 3 lorsqu'il règne dans l'enceinte de cuisson une pression sensiblement supérieure à la pression atmosphérique, ou à tout le moins supérieure à un niveau de pression prédéterminé supérieur à la pression atmosphérique. Avantageusement, le moyen de sécurité à l'ouverture 5 est au moins en partie monté à demeure sur le couvercle 3, c'est-à-dire qu'il est embarqué sur ce dernier et fait donc partie en permanence du sous-ensemble de couvercle 300. Il est cependant parfaitement envisageable, sans pour autant que l'on sorte du cadre de l'invention, que le moyen de sécurité à l'ouverture 5 soit alternativement embarqué par le premier sous-ensemble 200A ou le deuxième sous-ensemble 200B.

Le moyen de sécurité à l'ouverture 5 est destiné à coopérer, en position de blocage, avec le deuxième sous-ensemble 200B, pour immobiliser le couvercle 3 et le deuxième sous-ensemble 200B en rotation selon ledit premier axe Y-Y'.

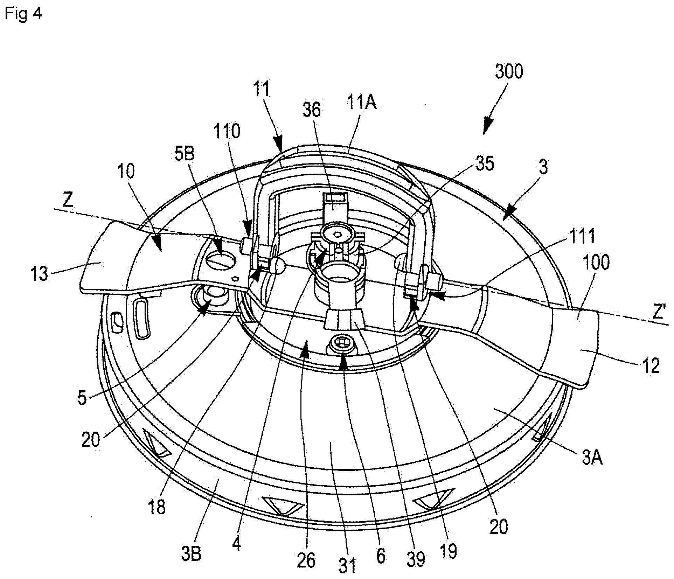

Le moyen de sécurité à l'ouverture 5 comprend par exemple un élément mobile 5A monté à coulissement sur le couvercle 3, et en l'espèce à coulissement vertical selon une direction de coulissement parallèle à l'axe vertical central X-X', entre une position haute (de butée) dans laquelle il est capable de coopérer avec une conformation complémentaire de blocage 5B (en l'espèce un orifice) portée par le support 10, afin de bloquer le pivotement du couvercle 3 relativement au support 10, et une position basse (de rappel et de butée) dans laquelle il n'interfère pas avec la conformation complémentaire de blocage 5B, autorisant ainsi le pivotement libre du couvercle 3 relativement au support 10. Comme illustré aux figures, l'élément mobile 5A est formé avantageusement par un doigt destiné à coulisser verticalement au sein d'un tube 5C abouché à un orifice de fuite 5D ménagé à travers le couvercle 3. En position haute, le doigt vient obturer hermétiquement l'orifice de fuite 5D en question, alors qu'en position basse la vapeur est autorisée à fuir par ledit orifice 5D. Une fenêtre de visualisation 41B est par ailleurs ménagée à travers la couronne 41, de façon à permettre à l'utilisateur de voir le doigt 5A lorsque ce dernier se trouve en position haute, indiquant l'existence au sein de l'appareil 1 d'un niveau de pression suffisamment élevé pour être incompatible avec un déverrouillage sécurisé du couvercle 3. Tant que la configuration de verrouillage n'est pas atteinte, l'élément mobile 5A n'est pas aligné avec l'orifice 5B ménagé à travers la traverse 100, et est ainsi empêché de monter pour atteindre sa position haute d'étanchéité, car il vient alors en butée sous et contre la traverse 100 (cf. figure 4). Ceci constitue une sécurité à la mauvaise fermeture, empêchant la montée en pression de l'appareil 1 tant que la configuration de verrouillage n'est pas atteinte.

Avantageusement, le dispositif de liaison débrayable 42 (mis en œuvre dans la variante des figures 1 à 12) est configuré pour désaccoupler l'organe de commande 10 et chaque conformation motrice 18, 19 lorsque l'organe de commande 10 est déplacé de sa deuxième position (position rétractée correspondant à la configuration de verrouillage) vers sa première position (position déployée correspondant à la configuration de déverrouillage) alors que le moyen de sécurité à l'ouverture 5 est dans sa position de blocage, de telle sorte que l'organe de commande 10 est alors libre de se déplacer de sa deuxième vers sa première position, sans pour autant que les conformations motrices 18, 19 exercent le moindre effort d'entraînement sur les conformations réceptrices 16, 17.

Selon le mode de réalisation illustré aux figures 1 à 12, le dispositif de liaison débrayable 42 inclut au moins :
- chaque pièce intermédiaire 20 portée par l'organe de commande 11 et montée à rotation à une extrémité de l'anse 11A formant en l'espèce ledit organe de commande 11,
- ainsi que les pênes 23, 24 guidés à coulissement par les logement 23A, 24A et qui viennent se loger dans les cavités (gâches) correspondantes 22 ménagées à la surface de chaque pièce intermédiaire 20 pour en bloquer la rotation.

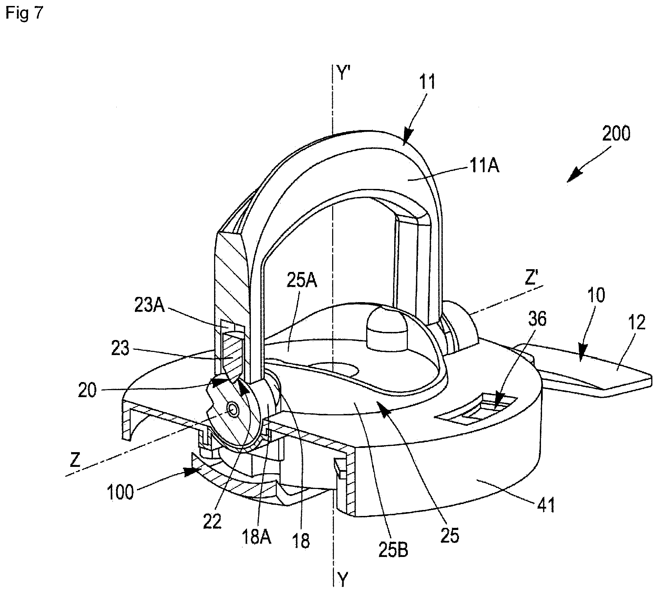

Le dispositif de liaison débrayable 42 inclut également des éléments élastiques de rappel (ressorts hélicoïdaux ou autres - non illustrés) disposés par exemple dans chaque logement 23A, 24A accueillant chaque pêne 23, 24, pour rappeler élastiquement chaque pêne 23, 24 dans une position de verrouillage dans laquelle chaque pêne 23, 24 engage respectivement la cavité 22 correspondante ménagée à la surface de la pièce intermédiaire 20 *(cf.* figure 7), empêchant ainsi la rotation des pièces intermédiaires 20 relativement à l'anse 11A. Lorsque le moyen de sécurité à l'ouverture 5 est en position de blocage, et qu'un utilisateur exerce malgré tout sur l'anse 11A un effort de déverrouillage visant à faire passer l'anse 11A de sa position rétractée (rabattue sur le couvercle) à sa position déployée, la mise en rotation du moyeu 25 est rendue impossible par l'insertion du doigt 41B dans l'orifice 5B de la traverse 100. Si l'utilisateur continue alors à forcer sur l'anse 11A, la force d'entraînement qu'il exerce sur cette dernière va surmonter la force de rappel exercée par le ressort de rappel sur chaque pêne 23, 24, de sorte que ce dernier va être repoussé en dehors de la cavité correspondante 22, permettant ainsi à l'anse 11A de pivoter relativement à chaque pièce intermédiaire 20 qui elle reste immobile. Le déplacement de l'anse 11A en rotation n'est donc plus communiqué à chaque conformation motrice 18, 19, de sorte que le moyeu 25 n'est pas soumis à un quelconque effort d'entraînement. Ce débrayage permet d'éviter de soumettre le mécanisme de verrouillage/déverrouillage à des efforts intempestifs qui pourraient entraîner une rupture de certaines pièces du mécanisme de commande. L'anse 11A peut être ensuite réarmée par l'utilisateur qui n'a qu'à simplement la ramener dans sa position rétractée, pour que chaque pêne 23, 24 se retrouve en regard de la cavité correspondante 22 et puisse à nouveau, sous l'effet de la force de rappel exercée par le ressort, revenir s'insérer dans la cavité correspondante 22 en question, afin de réaliser ainsi une liaison d'entraînement en rotation selon le deuxième axe Z-Z' des conformations motrices 18, 19.

Avantageusement, ledit deuxième sous-ensemble 200B embarque ledit dispositif de liaison débrayable 42. Cela permet par exemple, dans le mode de réalisation selon les figures 13 à 18 où le deuxième sous-ensemble 200B reste fixé à demeure au couvercle 3, de maintenir une fonction de sécurité supplémentaire associée en permanence au couvercle 3.

L'appareil 1 selon l'invention présente ainsi un niveau de sécurité et de fiabilité élevé.

## Revendications

1. Appareil (1) de cuisson d'aliments sous pression comportant :
- une cuve (2) ainsi qu'un couvercle (3) destiné à être verrouillé relativement à la cuve (2) pour former avec elle une enceinte de cuisson apte à monter en pression,
- un système de verrouillage à baïonnette configuré pour assurer le verrouillage et le déverrouillage du couvercle (3) relativement à la cuve (2) par pivotement du couvercle (3) relativement à la cuve (2),
- un support (10) destiné à être attaché audit couvercle (3) de façon que ce dernier puisse pivoter relativement audit support (10) selon un premier axe de rotation (Y-Y') entre deux positions correspondant respectivement à une configuration de déverrouillage et une configuration de verrouillage,
- un organe de commande (11) du verrouillage / déverrouillage actionnable manuellement et destiné à être attaché audit support (10) par une liaison mécanique autorisant le déplacement manuel dudit organe de commande (11) relativement audit support (10),
- un dispositif de transformation dudit déplacement manuel de l'organe de commande (11) en pivotement du couvercle (3) relativement au support (10), ledit dispositif de transformation comprenant au moins une conformation motrice (18, 19) destinée à être portée par l'organe manuel de commande (11) et au moins une conformation réceptrice (16, 17) destinée à être reliée au couvercle (3) et à être engagée par ladite conformation motrice (18, 19),
- un moyen de régulation de pression (4) pour maintenir la pression régnant au sein de l'enceinte de cuisson à un niveau de consigne,
ledit appareil (1) étant **caractérisé en ce qu'**il comprend un module de commande (200) attaché de façon amovible audit couvercle (3), ledit module de commande (200) embarquant au moins un premier sous-ensemble (200A) qui inclut au moins ledit moyen de régulation de pression (4) et ladite conformation réceptrice (16, 17).

2. Appareil (1) selon la revendication précédente **caractérisé en ce qu'**il comprend un deuxième sous-ensemble (200B) qui inclut au moins ledit organe de commande, ladite au moins une conformation motrice (18, 19) ainsi que ledit support (10), ledit deuxième sous-ensemble (200B) étant destiné à être monté à pivotement par rapport audit premier sous-ensemble (200A) selon ledit premier axe de rotation (Y-Y').

3. Appareil (1) selon la revendication précédente **caractérisé en ce que** lesdits premier et deuxième sous-ensemble (200A, 200B) sont attachés l'un à l'autre de façon amovible.

4. Appareil (1) selon la revendication 2 ou 3 **caractérisé en ce que** ledit module de commande (200) embarque également ledit deuxième sous-ensemble (200B).

5. Appareil (1) selon l'une quelconque des revendications précédentes **caractérisé en ce qu'**il comprend un sous-ensemble de couvercle (300) qui inclut à la fois ledit couvercle (3) et au moins ledit support (10), le sous-ensemble de couvercle (300) en configuration de déverrouillage et la cuve (2) étant conçus pour être réunis selon au moins un agencement relatif prédéterminé permettant audit système de verrouillage à baïonnette de verrouiller le couvercle (3) à la cuve (2) par pivotement du couvercle (3) selon ledit premier axe de rotation (Y-Y'), afin de faire passer le sous-ensemble de couvercle (300) de la configuration de déverrouillage à la configuration de verrouillage.

6. Appareil (1) selon la revendication précédente **caractérisé en ce que** lesdits support (10) et cuve (2) sont pourvus respectivement de conformations de support (12, 13) et de cuve (14, 15) complémentaires destinées à coopérer par emboîtement lorsque le sous-ensemble de couvercle (300) en configuration de déverrouillage et la cuve (2) sont réunis selon ledit agencement relatif prédéterminé, ledit emboîtement permettant de verrouiller la position angulaire relative du support (10) et de la cuve (2) dans un plan horizontal, ledit support (10) comprenant une traverse (100) s'étendant longitudinalement entre deux extrémités opposées qui débordent radialement du couvercle (3) pour former lesdites conformations de support (12, 13), lesquelles sont configurées pour coopérer respectivement avec des logements complémentaires formant lesdites conformations de cuve (14, 15).

7. Appareil (1) selon l'une quelconque des revendications précédentes **caractérisé en ce que** l'une desdites conformations réceptrice (16, 17) et motrice (18, 19) forme une conformation femelle tandis que l'autre desdites conformations réceptrice (16, 17) et motrice (18, 19) forme une conformation mâle destinée à être logée dans ladite conformation femelle, la conformation mâle pouvant coulisser dans la conformation femelle au sein de laquelle elle est respectivement logée selon une direction de coulissement sensiblement parallèle audit premier axe de rotation (Y-Y').

8. Appareil (1) selon l'une quelconque des revendications précédentes **caractérisé en ce que** ledit organe de commande (11) est monté à pivotement relativement audit support (10) selon un deuxième axe de rotation (Z-Z') qui est perpendiculaire audit premier axe de rotation (Y-Y').

9. Appareil (1) selon la revendication précédente **caractérisé en ce que** ledit organe de commande (11) comprend une anse (11A) qui s'étend entre deux extrémités (110, 111) traversées par ledit deuxième axe de rotation (Z-Z'), ladite conformation motrice étant portée par l'une desdites deux extrémités (110, 111).

10. Appareil (1) selon l'une quelconque des revendications précédentes **caractérisé en ce que** ledit premier sous-ensemble (200A) comprend un moyeu (25) destiné à être attaché au couvercle (3) coaxialement audit premier axe de rotation (Y-Y'), ledit moyeu (25) portant ladite au moins une conformation réceptrice (16, 17).

11. Appareil (1) selon la revendication précédente **caractérisé en ce que** ledit moyeu (25) forme un capot (25) qui contribue à délimiter un logement accueillant ledit moyen de régulation de pression (4).

12. Appareil (1) selon la revendication précédente **caractérisé en ce qu'**il comprend une platine (26) fixée audit moyeu (25), sous ce dernier, pour contribuer à former avec lui ledit logement, ledit premier sous-ensemble (200A) incluant ladite platine (26), ledit dispositif de transformation incluant un premier et un deuxième organes de transmission complémentaires (43, 44) embarqués respectivement par ledit premier sous-ensemble (200A) et ledit couvercle (3) et qui sont destinés à coopérer pour permettre l'entraînement en rotation selon ledit premier axe de rotation (Y-Y') dudit couvercle (3) par ledit premier sous-ensemble (200A).

13. Appareil (1) selon l'une quelconque des revendications précédentes **caractérisé en ce qu'**il comprend un moyen de sécurité à l'ouverture (5) sensible à la pression régnant dans l'enceinte de cuisson et susceptible d'occuper une position de blocage dans laquelle il empêche le déverrouillage du couvercle (3) lorsqu'il règne dans l'enceinte de cuisson une pression sensiblement supérieure à la pression atmosphérique, ledit moyen de sécurité à l'ouverture (5) étant monté à demeure sur ledit couvercle (3), ledit moyen de sécurité à l'ouverture (5) étant destiné à coopérer, en position de blocage, avec le deuxième sous-ensemble (200B) pour immobiliser le couvercle (3) et le deuxième sous-ensemble (200B) en rotation selon ledit premier axe (Y-Y').

14. Appareil (1) selon la revendication précédente **caractérisé en ce qu'**il comprend un dispositif de liaison débrayable (42) assurant une liaison mécanique débrayable entre ledit organe de commande (11) et chaque conformation motrice (18, 19), ledit organe de commande (11) étant monté mobile relativement au support (10) entre une première et une deuxième position correspondant respectivement au déverrouillage et au verrouillage du couvercle (3) relativement à la cuve (2), ledit dispositif de liaison débrayable (42) étant configuré pour désaccoupler l'organe de commande (10) et chaque conformation motrice (18, 19) lorsque l'organe de commande (10) est déplacé de sa deuxième position vers sa première position alors que le moyen de sécurité à l'ouverture (5) est dans sa position de blocage, de telle sorte que l'organe de commande (10) est libre de se déplacer de sa deuxième vers sa première position, ledit deuxième sous-ensemble (200B) embarquant ledit dispositif de liaison débrayable (42).

15. Appareil (1) selon l'une quelconque des revendications précédentes **caractérisé en ce qu'**il comprend une tige d'assemblage (27) qui est embarquée par ledit module de commande (200) et fait saillie de ce dernier, ledit appareil comprenant également un orifice central de fixation (29) ménagé à travers le couvercle (3) et à travers lequel ladite tige (27) est destinée à passer pour attacher ledit module de commande (200) au couvercle (3).

## Patentansprüche

1. Gerät (1) zum Garen von Lebensmitteln unter Druck, das Folgendes enthält:
- einen Behälter (2) sowie einen Deckel (3), der dazu bestimmt ist, in Bezug auf den Behälter (2) verriegelt zu werden, um mit diesem einen Garraum zu bilden, der dazu geeignet ist, Druck aufzubauen,
- ein Bajonettverriegelungssystem, das so konfiguriert ist, dass es die Verriegelung und Entriegelung des Deckels (3) in Bezug auf den Behälter (2) durch Schwenken des Deckels (3) in Bezug auf den Behälter (2) gewährleistet,
- eine Halterung (10), die dazu bestimmt ist, an dem Deckel (3) befestigt zu werden, so dass dieser in Bezug auf die Halterung (10) um eine erste Drehachse (Y-Y') zwischen zwei Positionen schwenken kann, die jeweils einer Entriegelungskonfiguration und einer Verriegelungskonfiguration entsprechen,
- ein manuell bedienbares Steuerelement (11) zur Verriegelung/Entriegelung, das dazu bestimmt ist, an der Halterung (10) durch eine mechanische Verbindung befestigt zu werden, die die manuelle Bewegung des Steuerelements (11) in Bezug auf die Halterung (10) ermöglicht,
- eine Vorrichtung zur Umwandlung der manuellen Bewegung des Steuerelements (11) in ein Schwenken des Deckels (3) in Bezug auf die Halterung (10), wobei die Umwandlungsvorrichtung mindestens eine Antriebskonformation (18, 19), die dazu bestimmt ist, vom manuellen Steuerelement (11) getragen zu werden, und mindestens eine Aufnahmekonformation (16, 17) umfasst, die dazu bestimmt ist, mit dem Deckel (3) verbunden zu werden und von der Antriebskonformation (18, 19) in Eingriff genommen zu werden,
- ein Druckregelungsmittel (4), um den im Garraum herrschenden Druck auf einem Sollwertniveau zu halten,
wobei das Gerät (1) **dadurch gekennzeichnet ist, dass** es ein Steuermodul (200) umfasst, das lösbar an dem Deckel (3) befestigt ist, wobei mindestens eine erste Unterbaugruppe (200A) in das Steuermodul (200) integriert ist, die mindestens das Druckregelungsmittel (4) und die Aufnahmekonformation (16, 17) beinhaltet.

2. Gerät (1) nach dem vorhergehenden Anspruch, **dadurch gekennzeichnet, dass** es eine zweite Unterbaugruppe (200B) umfasst, die mindestens das Steuerelement, die mindestens eine Antriebskonformation (18, 19) sowie die Halterung (10) umfasst, wobei die zweite Unterbaugruppe (200B) dazu bestimmt ist, in Bezug auf die erste Unterbaugruppe (200A) schwenkbar entlang der ersten Drehachse (Y-Y') montiert zu werden.

3. Gerät (1) nach dem vorhergehenden Anspruch, **dadurch gekennzeichnet, dass** die erste und die zweite Unterbaugruppe (200A, 200B) lösbar aneinander befestigt sind.

4. Gerät (1) nach Anspruch 2 oder 3, **dadurch gekennzeichnet, dass** auch die zweite Unterbaugruppe (200B) in das Steuermodul (200) integriert ist.

5. Gerät (1) nach einem der vorhergehenden Ansprüche, **dadurch gekennzeichnet, dass** es eine Deckelunterbaugruppe (300) umfasst, die sowohl den Deckel (3) als auch mindestens die Halterung (10) beinhaltet, wobei die Deckelunterbaugruppe (300) in Entriegelungskonfiguration und der Behälter (2) so ausgelegt sind, dass sie nach mindestens einer vorbestimmten relativen Anordnung zusammengefügt werden, die es dem Bajonettverriegelungssystem ermöglicht, den Deckel (3) durch Schwenken des Deckels (2) entlang der ersten Drehachse (Y-Y') mit dem Behälter (3) zu verriegeln, um die Deckelunterbaugruppe (300) von der Entriegelungskonfiguration in die Verriegelungskonfiguration zu versetzen.

6. Gerät (1) nach dem vorhergehenden Anspruch, **dadurch gekennzeichnet, dass** die Halterung (10) und der Behälter (2) jeweils mit zusätzlichen Halterungskonformationen (12, 13) und Behälterkonformationen (14, 15) versehen sind, die dazu bestimmt sind, durch Verrastung zusammenzuwirken, wenn die Deckelunterbaugruppe (300) in Entriegelungskonfiguration und der Behälter (2) gemäß der vorbestimmten relativen Anordnung zusammengeführt sind, wobei die Verrastung es ermöglicht, die relative Winkelposition der Halterung (10) und des Behälters (2) in einer horizontalen Ebene zu verriegeln, wobei die Halterung (10) einen Querträger (100) umfasst, der sich längs zwischen zwei gegenüberliegenden Enden erstreckt, die radial über den Deckel (3) herausragen, um die Halterungkonformationen (12, 13) zu bilden, die jeweils so konfiguriert sind, dass sie mit ergänzenden Aufnahmen zusammenwirken, die die Behälterkonformationen (14, 15) bilden.

7. Gerät (1) nach einem der vorhergehenden Ansprüche, **dadurch gekennzeichnet, dass** eine der Aufnahme- (16, 17) und Antriebskonformationen (18, 19) eine weibliche Konformation bildet, während die andere der Aufnahme- (16, 17) und Antriebskonformationen (18, 19) eine männliche Konformation bildet, die dazu bestimmt ist, in der weiblichen Konformation untergebracht zu werden, wobei die männliche Konformation in die weibliche Konformation gleiten kann, in der sie jeweils in einer Gleitrichtung gelagert ist, die im Wesentlichen parallel zu der ersten Drehachse (Y-Y') verläuft.

8. Gerät (1) nach einem der vorhergehenden Ansprüche, **dadurch gekennzeichnet, dass** das Steuerelement (11) in Bezug auf die Halterung (10) entlang einer zweiten Drehachse (Z-Z'), die senkrecht zu der ersten Drehachse (Y-Y') verläuft, schwenkbar montiert ist.

9. Gerät (1) nach dem vorhergehenden Anspruch, **dadurch gekennzeichnet, dass** das Steuerelement (11) einen Bügel (11A) umfasst, der sich zwischen zwei Enden (110, 111) erstreckt, die von der zweiten Drehachse (Z-Z') durchquert werden, wobei die Antriebskonformation von einem der beiden Enden (110, 111) getragen wird.

10. Gerät (1) nach einem der vorhergehenden Ansprüche, **dadurch gekennzeichnet, dass** die erste Unterbaugruppe (200A) eine Nabe (25) umfasst, die dazu bestimmt ist, koaxial zu der ersten Drehachse (Y-Y') am Deckel (3) befestigt zu werden, wobei die Nabe (25) die mindestens eine Aufnahmekonformation (16, 17) trägt.

11. Gerät (1) nach dem vorhergehenden Anspruch, **dadurch gekennzeichnet, dass** die Nabe (25) eine Abdeckung (25) bildet, die dazu beiträgt, eine Aussparung zu begrenzen, die das Druckregelungsmittel (4) aufnimmt.

12. Gerät (1) nach dem vorhergehenden Anspruch, **dadurch gekennzeichnet, dass** es eine Platte (26) umfasst, die an der Nabe (25) unter dieser fixiert ist, um dazu beizutragen, mit ihr die Aussparung zu bilden, wobei die erste Unterbaugruppe (200A) die Platte (26) beinhaltet, wobei die Umwandlungsvorrichtung ein erstes und ein zweites zusätzliches Übertragungselement (43, 44) beinhaltet, die jeweils in die erste Unterbaugruppe (200A) und den Deckel (3) integriert sind und die dazu bestimmt sind, zusammenzuwirken, um den Drehantrieb entlang der ersten Drehachse (Y-Y') des Deckels (3) durch die erste Unterbaugruppe (200A) zu ermöglichen.

13. Gerät (1) nach einem der vorhergehenden Ansprüche, **dadurch gekennzeichnet, dass** es ein im Garraum herrschendes druckempfindliches Öffnungssicherheitsmittel (5) umfasst, das eine Sperrposition einnehmen kann, in der es das Entriegeln des Deckels (3) verhindert, wenn im Garraum ein Druck herrscht, der im Wesentlichen über dem atmosphärischen Druck liegt, wobei das Öffnungssicherheitsmittel (5) fest an dem Deckel (3) montiert ist, wobei das Öffnungssicherheitsmittel (5) dazu bestimmt ist, in der Sperrposition mit der zweiten Unterbaugruppe (200B) zusammenzuwirken, um den Deckel (3) und die zweite Unterbaugruppe (200B) in der Drehung entlang der ersten Achse (Y-Y') zu immobilisieren.

14. Gerät (1) nach dem vorhergehenden Anspruch, **dadurch gekennzeichnet, dass** es eine auskuppelbare Verbindungsvorrichtung (42) umfasst, die eine auskuppelbare mechanische Verbindung zwischen dem Steuerelement (11) und jeder Antriebskonformation (18, 19) gewährleistet, wobei das Steuerelement (11) in Bezug auf die Halterung (10) beweglich zwischen einer ersten und einer zweiten Position montiert ist, die jeweils der Entriegelung und der Verriegelung des Deckels (3) in Bezug auf den Behälter (2) entsprechen, wobei die auskuppelbare Verbindungsvorrichtung (42) so konfiguriert ist, dass sie das Steuerelement (10) und jede Antriebskonformation (18, 19) entkoppelt, wenn das Steuerelement (10) von seiner zweiten Position in seine erste Position bewegt wird, während sich das Öffnungssicherheitsmittel (5) in seiner Sperrposition befindet, so dass das Steuerelement (10) sich frei von seiner zweiten in seine erste Position bewegen kann, wobei die auskuppelbare Verbindungsvorrichtung (42) in die zweite Unterbaugruppe (200B) integriert ist.

15. Gerät (1) nach einem der vorhergehenden Ansprüche, **dadurch gekennzeichnet, dass** es eine Verbindungsstange (27) umfasst, die in das Steuermodul (200) integriert ist und aus diesem herausragt, wobei das Gerät auch eine zentrale Fixierungsöffnung (29) umfasst, die durch den Deckel (3) hindurch ausgebildet ist und durch die die Stange (27) hindurchgeführt werden soll, um das Steuermodul (200) am Deckel (3) zu befestigen.

## Claims

1. A food pressure cooking appliance (1) including:
- a bowl (2) as well as a lid (3) intended to be locked relative to the bowl (2) to form with the latter a cooking chamber adapted to rise in pressure,
- a bayonet locking system configured to ensure the locking and unlocking of the lid (3) relative to the bowl (2) by swivelling of the lid (3) relative to the bowl (2),
- a support (10) intended to be attached to said lid (3) in such a way that the latter can swivel relative to said support (10) about a first axis of rotation (Y-Y') between two positions corresponding to an unlocking configuration and a locking configuration, respectively,
- a manually operable locking/unlocking control member (11), intended to be attached to said support (10) by a mechanical link allowing the manual movement of said control member (11) relative to said support (10),
- a device for transforming said manual movement of the control member (11) into swivelling of the lid (3) relative to the support (10), said transformation device comprising at least one driving conformation (18, 19) intended to be carried by the manual control member (11) and at least one driven conformation (16, 17) intended to be linked to the lid (3) and engaged by said driving conformation (18, 19),
- a pressure regulation means (4) for maintaining the pressure inside the cooking chamber at a set point level,
said appliance (1) being **characterized in that** it comprises a control module (200) removably attached to said lid (3), said control module (200) bearing at least one first subset (200A) that includes at least said pressure regulation means (4) and said driven conformation (16, 17).

2. The appliance (1) according to the preceding claim, **characterized in that** it comprises a second subset (200B) that includes at least said control member, said at least one driving conformation (18, 19) as well as said support (10), said second subset (200B) being intended to be swivel-mounted with respect to said first subset (200A) about said first axis of rotation (Y-Y').

3. The appliance (1) according to the preceding claim, **characterized in that** said first and second subset (200A, 200B) are removably attached to each other.

4. The appliance (1) according to claim 2 or 3, **characterized in that** said control module (200) also bears said second subset (200B).

5. The appliance (1) according to any one of the preceding claims, **characterized in that** it comprises a lid subset (300) that includes both said lid (3) and at least said support (10), the lid subset (300) in unlocking configuration and the bowl (2) being designed to be combined according to at least one predetermined relative arrangement allowing said bayonet locking system to lock the lid (3) to the bowl (2) by swivelling of the lid (3) about said first axis of rotation (Y-Y'), in such a way as to cause the lid subset (300) to switch from the unlocking configuration to the locking configuration.

6. The appliance (1) according to the preceding claim, **characterized in that** said support (10) and bowl (2) are respectively provided with complementary support conformations (12, 13) and bowl conformations (14, 15) intended to cooperate with each other by fitting together when the lid subset (300) in unlocking configuration and the bowl (2) are combined according to said predetermined relative arrangement, said fitting together making it possible to lock the relative angular position of the support (10) and the bowl (2) in a horizontal plane, said support (10) comprising a crossbar (100) extending longitudinally between two opposite ends that protrude radially from the lid (3) to form said support conformations (12, 13), these latter being configured to cooperate with respective complementary accommodations forming said bowl configurations (14, 15).

7. The appliance (1) according to any one of the preceding claims, **characterized in that** one of said driven conformations (16, 17) and driving conformations (18, 19) forms a female conformation, whereas the other of said driven conformations (16, 17) and driving conformations (18, 19) forms a male conformation intended to be received inside said female conformation, the male conformation being able to slide within the female conformation, inside which it is respectively received, along a sliding direction substantially parallel to said first axis of rotation (Y-Y').

8. The appliance (1) according to any one of the preceding claims, **characterized in that** said control member (11) is swivel-mounted relative to said support (10) about a second axis of rotation (Z-Z') that is perpendicular to said first axis of rotation (Y-Y').

9. The appliance (1) according to the preceding claim, **characterized in that** said control member (11) comprises a handle (11A) that extends between two ends (110, 111) passed through by said second axis of rotation (Z-Z'), said driving conformation being carried by one of said two ends (110, 111).

10. The appliance (1) according to any one of the preceding claims, **characterized in that** said first subset (200A) comprises a hub (25) intended to be attached to the lid (3) coaxially to said first axis of rotation (Y-Y'), said hub (25) carrying said at least one driven conformation (16, 17).

11. The appliance (1) according to the preceding claim, **characterized in that** said hub (25) forms a cap (25) that helps to delimit an accommodation receiving said pressure regulation means (4).

12. The appliance (1) according to the preceding claim, **characterized in that** it comprises a plate (26) attached to said hub (25), under the latter, in such a way as to form said accommodation with the latter, said first subset (200A) including said plate (26), said transformation device including a first and a second complementary transmission members (43, 44) respectively borne by said first subset (200A) and said lid (3) and which are intended to cooperate with each other in order to allow the rotational drive about said first axis of rotation (Y-Y') of said lid (3) by said first subset (200A).

13. The appliance (1) according to any one of the preceding claims, **characterized in that** it comprises an opening safety means (5) sensitive to the pressure inside the cooking chamber and liable to occupy a blocking position in which it prevents the unlocking of the lid (3) when the pressure inside the cooking chamber is substantially higher than the atmospheric pressure, said opening safety means (5) being permanently mounted on said lid (3), said opening safety means (5) being intended to cooperate, in locking position, with the second subset (200B) to immobilize the lid (3) and the second subset (200B) in rotation about said first axis (Y-Y').

14. The appliance (1) according to the preceding claim, **characterized in that** it comprises a disengageable link device (42) ensuring a disengageable mechanical link between said control member (11) and each driving conformation (18, 19), said control member (11) being movably mounted relative to the support (10) between a first and a second position corresponding to the unlocking and the locking, respectively, of the lid (3) relative to the bowl (2), said disengageable link device (42) being configured to uncouple the control member (10) and each driving conformation (18, 19) when the control member (10) is moved from its second position to its first position, whereas the opening safety mans (5) is in its blocking position, in such a way that the control member (10) is free to move from its second to its first position, said second subset (200B) bearing said disengageable link device (42).

15. The appliance (1) according to any one of the preceding claims, **characterized in that** it comprises an assembly rod (27) that is borne by said control module (200) and protrudes from the latter, said appliance also comprising a central fastening hole (29) formed through the lid (3) and through which said rod (27) is intended to pass to attach said control module (200) to the lid (3).
